(19) **Europäisches Patentamt / European Patent Office / Office européen des brevets**

(11) **EP 4 221 380 A1**

(12) **EUROPEAN PATENT APPLICATION**
published in accordance with Art. 153(4) EPC

(43) Date of publication:
**02.08.2023 Bulletin 2023/31**

(21) Application number: **21879487.3**

(22) Date of filing: **14.10.2021**

(51) International Patent Classification (IPC):
**H04W 64/00** (2009.01)

(52) Cooperative Patent Classification (CPC):
**H04L 5/00; H04W 24/02; H04W 64/00**

(86) International application number:
**PCT/CN2021/123805**

(87) International publication number:
**WO 2022/078445 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2020 CN 202011105346**

(71) Applicant: **Vivo Mobile Communication Co., Ltd.
Dongguan, Guangdong 523863 (CN)**

(72) Inventors:
 • **WANG, Yuanyuan**
  **Dongguan, Guangdong 523863 (CN)**
 • **WU, Huaming**
  **Dongguan, Guangdong 523863 (CN)**
 • **SI, Ye**
  **Dongguan, Guangdong 523863 (CN)**
 • **SUN, Peng**
  **Dongguan, Guangdong 523863 (CN)**

(74) Representative: **Murgitroyd & Company
Murgitroyd House
165-169 Scotland Street
Glasgow G5 8PL (GB)**

(54) **POSITIONING METHOD, TERMINAL, AND NETWORK SIDE DEVICE**

(57) This application discloses a positioning method, a terminal, and a network-side device, and pertains to the wireless communication field. The positioning method includes at least one of following: sending, by a terminal, first information, where the first information includes at least one of following: configuration information of a first positioning reference signal, activation information of a second positioning reference signal, request information for a third positioning reference signal, and first indication information of a fourth positioning reference signal, where the first indication information includes at least one of following: power control information, bandwidth part BWP switching information, collision indication information, and multiplexing information; and receiving, by the terminal, second information; where the second information includes at least one of following: configuration information of a fifth positioning reference signal, activation information of a sixth positioning reference signal, request information for a seventh positioning reference signal, and the first indication information of an eighth positioning reference signal.

FIG. 2

200

A terminal sends first information — S210

The terminal receives second information — S212

**Description**

**CROSS-REFERENCE TO RELATED APPLICATION**

The present invention claims priority to Chinese Patent Application No. 202011105346.X, filed with the China National Intellectual Property Administration on October 15, 2020 and entitled "POSITIONING METHOD, TERMINAL, AND NETWORK-SIDE DEVICE", which is incorporated herein by reference in its entirety.

**TECHNICAL FIELD**

This application pertains to the field of wireless communications technologies, and specifically relates to a positioning method, a terminal, and a network-side device.

**BACKGROUND**

In wireless communication systems, for example, R16 wireless communication systems, only periodic positioning reference signals (Positioning Reference Signal, PRS) are supported, and for PRS measurement results, only higher-layer measurement requests based on the LTE positioning protocol (LTE Positioning Protocol, LPP) are supported for performance of periodic reporting or reporting per request. In addition, all request and measurement interaction of PRS is between a terminal and a location management function (Location Management Function, LMF).
To meet the requirement for low latency, aperiodic, semi-persistent, or on-demand (on demand) PRS needs to be implemented. However, currently no solution supporting implementation of aperiodic PRS, semi-persistent PRS, or on-demand PRS is yet available.

**SUMMARY**

Embodiments of this application provide a positioning method, a terminal, and a network-side device, so as to support aperiodic PRS, semi-persistent PRS, or on-demand PRS.
According to a first aspect, a positioning method is provided. The method includes at least one of the following: sending, by a terminal, first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part BWP switching information, collision indication information, and multiplexing information; and receiving, by the terminal, second information; where the second information includes at least one of the following: configuration information of a fifth positioning reference signal, activation information of a sixth positioning reference signal, request information for a seventh positioning reference signal, and the first indication information of an eighth positioning reference signal.
According to a second aspect, a positioning apparatus is provided, including at least one of the following: a first sending module, configured to send first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part BWP switching information, collision indication information, and multiplexing information; and a first receiving module, configured to receive second information, where the second information includes at least one of the following: configuration information of a fifth positioning reference signal, activation information of a sixth positioning reference signal, request information for a seventh positioning reference signal, and the first indication information of an eighth positioning reference signal.
According to a third aspect, a positioning method is provided. The method includes at least one of the following: receiving, by a network-side device, first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part BWP switching information, collision indication information, and multiplexing information; and sending, by the network-side device, second information, where the second information includes at least one of the following: configuration information of a fifth positioning reference signal, activation information of a sixth positioning reference signal, request information for a seventh positioning reference signal, and the first indication information of an eighth positioning reference signal.
According to a fourth aspect, a positioning apparatus is provided, including at least one of the following: a second receiving module, configured to receive first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part BWP switching information, collision indication information, and multiplexing information; and a second sending module, configured to send second information, where the second information includes at least one of the following: configuration information of a fifth positioning reference signal, activation information of a sixth positioning reference signal, request information for a seventh positioning reference signal, and the first indication information of an eighth positioning reference signal.

According to a fifth aspect, a terminal is provided, where the terminal includes a processor, a memory, and a program or instructions stored in the memory and executable on the processor, and when the program or instructions are executed by the processor, the steps of the method according to the first aspect are implemented.

According to a sixth aspect, a network-side device is provided, where the network-side device includes a processor, a memory, and a program or instructions stored in the memory and executable on the processor, and when the program or instructions are executed by the processor, the steps of the method according to the third aspect are implemented.

According to a seventh aspect, a readable storage medium is provided, where a program or instructions are stored in the readable storage medium, and when the program or instructions are executed by a processor, the steps of the method according to the first aspect are implemented or the steps of the method according to the third aspect are implemented.

According to an eighth aspect, a chip is provided, where the chip includes a processor and a communications interface, the communications interface is coupled to the processor, and the processor is configured to execute a program or instructions of a terminal to implement the method according to the first aspect, or the processor is configured to execute a program or instructions of a network-side device to implement the method according to the third aspect.

According to a ninth aspect, a computer program product is provided, where the computer program product includes a processor, a memory, and a program or instructions stored in the memory and executable on the processor, and when the program or instructions are executed by the processor, the method according to the first aspect or the method according to the third aspect is implemented.

In the embodiments of this application, the terminal sends the first information and/or the terminal receives the second information, where the first information includes at least one of the following: configuration information of the first positioning reference signal, activation information of the second positioning reference signal, request information for the third positioning reference signal, and first indication information of the fourth positioning reference signal. The first indication information includes at least one of the following: power control information, bandwidth part BWP switching information, collision indication information, and multiplexing information; and the second information includes at least one of the following: configuration information of the fifth positioning reference signal, activation information for the sixth positioning reference signal, request information for the seventh positioning reference signal, and the first indication information of the eighth positioning reference signal. This can implement quick configuration and/or activation of positioning reference signals to make the communication system support aperiodic PRS, semi-persistent PRS, or on-demand PRS.

## BRIEF DESCRIPTION OF DRAWINGS

FIG. 1 is a block diagram of a wireless communication system to which the embodiments of this application are applicable;
FIG. 2 is a schematic flowchart of a positioning method according to an embodiment of this application;
FIG. 3 is a schematic structural diagram of an MAC CE according to an embodiment of this application;
FIG. 4 is a schematic structural diagram of another MAC CE according to an embodiment of this application;
FIG. 5 is a schematic structural diagram of still another MAC CE according to an embodiment of this application;
FIG. 6 is another schematic flowchart of a positioning method according to an embodiment of this application;
FIG. 7 is another schematic flowchart of a positioning method according to an embodiment of this application;
FIG. 8 is another schematic flowchart of a positioning method according to an embodiment of this application;
FIG. 9 is a schematic structural diagram of a positioning apparatus according to an embodiment of this application;
FIG. 10 is another schematic structural diagram of a positioning apparatus according to an embodiment of this application;
FIG. 11 is a schematic structural diagram of a communication device according to an embodiment of this application;
FIG. 12 is a schematic diagram of a hardware structure of a terminal according to an embodiment of this application;

and

FIG. 13 is a schematic diagram of a hardware structure of a network-side device according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that technologies described in the embodiments of this specification are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6-th generation (6-th Generation, 6G) communication system.

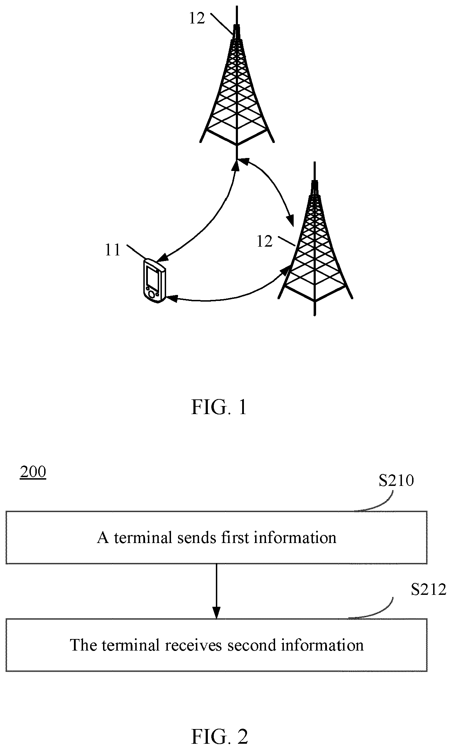

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VLTE), or pedestrian user equipment (PUE). The wearable device includes: a wrist band, earphones, glasses, or the like. It should be noted that a specific type of the terminal 11 is not limited in the embodiments of this application. It should be noted that in special cases, the terminal device 11 may alternatively be the network-side device 12. In this case, the present invention may be understood as a communication system between base stations or a communication system between a base station and a core network. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device includes, but is not limited to, a location management device or a location server such as an E-SMLC or an LMF, or another device having the same functions.

The following describes in detail a positioning method provided in the embodiments of this application by using specific embodiments and application scenarios thereof with reference to the accompanying drawings.

FIG. 2 is a flowchart of a positioning method according to an embodiment of this application. The method 200 may be executed by a terminal. In other words, the method may be performed by software or hardware installed on the terminal. As shown in FIG. 2, the method may include S210 and/or S212.

It should be noted that, although S212 is executed after S210 in the process shown in FIG. 2, this is not limited thereto, and S212 may alternatively be executed before S210 in this embodiment of this application. For details, refer to the description of an optional implementation of this application below.

S210: A terminal sends first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part (BWP) switching information, collision indication information, and multiplexing information.

In this embodiment of this application, a positioning reference signal includes, but is not limited to, PRS, sounding reference signal (Sounding Reference Signal, SRS), channel state information reference information (Channel State Information Reference Signal, CSI-RS), tracking reference signal (Tracking Reference Signal, TRS), and synchronization signal and physical broadcast channel signal block (or synchronization signal block) (Synchronization Signal and PBCH Block, SSB). In a possible embodiment, the positioning reference signal is a downlink positioning reference signal, or the positioning reference signal is a PRS.

In this embodiment, the first positioning reference signal may include a plurality of positioning reference signals; the second positioning reference signal may be one or more first positioning reference signals, or may be not directly related to the first positioning reference signal; and the third positioning reference signal may be a subset of the first positioning reference signal or second positioning reference signal, or may include a positioning reference signal other than the first positioning reference signal or the second positioning reference signal. The fourth positioning reference signal may be a subset of any one of the first positioning reference signal, the second positioning reference signal, or the third positioning reference signal.

In this embodiment, the first positioning reference signal mayinclude a plurality of positioning reference signal groups, and the second positioning reference signal may be one or more positioning reference signal groups in the first positioning reference signals. The third positioning reference signal may be one or more positioning reference signal groups in the first positioning reference signals or one or more positioning reference signal groups in the second positioning reference signals.

S212: The terminal receives second information; where the second information includes at least one of the following: configuration information of a fifth positioning reference signal, activation information of a sixth positioning reference signal, request information for a seventh positioning reference signal, and the first indication information of an eighth positioning reference signal.

In this embodiment, the fifth positioning reference signal may include a plurality of positioning reference signals, the sixth positioning reference signal may be one or more positioning reference signals in the fifth positioning reference signals, the seventh positioning reference signal may be a subset of the fifth positioning reference signals or sixth positioning reference signals, or may include a positioning reference signal other than the fifth positioning reference signal or the sixth positioning reference signal. The eighth positioning reference signal may be a subset of any one of the fifth positioning reference signal, the sixth positioning reference signal, and the seventh positioning reference signal.

In this embodiment, the fifth positioning reference signal may include a plurality of positioning reference signal groups, and the sixth positioning reference signal may be one or more positioning reference signal groups in the fifth positioning reference signals. The seventh positioning reference signal may be one or more positioning reference signal groups in the fifth positioning reference signals or one or more positioning reference signal groups in the sixth positioning reference signals.

In a possible implementation, the configuration information of the first positioning reference signal may include at least one of the following:

(1) Identifier (ID) information of the first positioning reference signal, where the ID information includes at least one of the following: frequency layer indicator information, Transmission and reception point TRP ID information, resource set or resource ID information, TRP group ID information, positioning reference signal group ID information, positioning reference signal resource group ID information, positioning reference signal resource set ID information, positioning reference signal reporting set ID information, measurement gap (Measurement gap, MG) ID information, and bandwidth part (Bandwidth Part, BWP) ID information.

(2) Configuration information corresponding to the ID information, where the corresponding configuration information includes at least one of the following: period, muting parameter, number of repetitions, offset within a period, bandwidth information, frequency-domain offset information, time information, spatial direction indication information, transmission configuration indicator (TCI) indication information, quasi co-location (QCL) indication information, beam indication information, power information, MG configuration information, type of positioning reference signal, BWP information, transmission, stop of transmission, activation/deactivation flag, numerology (numerology), and time offset information. The type of positioning reference signal includes at least one of the following: a periodic positioning reference signal, an aperiodic positioning reference signal, a semi-persistent positioning reference signal, and an on-demand positioning reference signal (which may be aperiodic or semi-persistent). If the ID information includes a TRP ID, the time offset information includes TRP time offset information corresponding to the TRP ID, or the time offset information may include cell time offset information; the configuration information may include configured configuration information corresponding to the ID information, or may include terminal-expected configuration information corresponding to the ID information. In actual application, the configured configuration information corresponding to the ID information may be configured by the network-side device (for example, an LMF or a gNB), and possibly does not meet requirements of the terminal; and therefore the terminal may not use the configuration of the network-side device, and the first information includes the terminal-expected configuration.

(3) Positioning method indication information.

(4) Precision requirement information.

(5) Configuration information of a first configuration window, where optionally, the configuration information of the first configuration window may include at least one of the following: configuration information of the first positioning reference signal in relation to the first configuration window, configuration information of a selected positioning reference signal in relation to the first configuration window, start time information of the first configuration window, window length information of the first configuration window, period information of the first configuration window, and pattern (pattern) of the first configuration window. The first configuration window includes at least one of the following: a search window, a measurement window, a measurement gap (MG), and a reporting window.

The configuration information of the first configuration window may include configured configuration information of the first configuration window, and may also include terminal-expected configuration information of the first configuration window. MG configuration information may include at least one of the following: gap pattern, gap period, gap offset information, and gap length.

(6) Discontinuous reception (Discontinuous Reception, DRX) configuration information.

The DRX configuration information may be configured DRX configuration information, or may include terminal-expected DRX configuration information.

(7) Positioning reference signal reporting set ID.

(8) Indication information of whether to be multiplexed with other signals.

(9) Configuration information of a multiplexed signal.

(10) Priority indication information of the first positioning reference signal.

In a possible implementation, in a case that the first positioning reference signal is a semi-persistent positioning reference signal, an aperiodic positioning reference signal, or an on-demand positioning reference signal, the configuration information of the first positioning reference signal further includes at least one of the following (1) to (4):

(1) One or more pieces of activation state information.

In a possible implementation, the one or more pieces of activation state information may include at least one of the following (a) to (c):

(a) At least one piece of first activation state information, where one piece of first activation state information is associated with one or more first positioning reference signal groups, where the first positioning reference signal group includes at least one of the first positioning reference signals.

That is, in this possible implementation, one piece of first activation state information is associated with one or more first positioning reference signal groups. For example, in this possible implementation, one piece of first activation state information is associated with one first positioning reference signal group, and one first positioning reference signal group includes one or more first positioning reference signals. The first activation state information being activated may indicate that all first positioning reference signals in the first positioning reference signal group are activated, or may indicate that one first positioning reference signal or a specific first positioning reference signal in the first positioning reference signal group is activated. In another possible implementation, one piece of first activation state information is associated with a plurality of first positioning reference signal groups, and each of the first positioning reference signal groups includes one or more first positioning reference signals. The first activation state information being activated may indicate that the plurality of first positioning reference signal groups are activated, or may indicate that one first positioning reference signal group is activated or one or more specific first positioning reference signal groups are activated. There may alternatively be one or more first positioning signals in an activated first positioning reference signal group.

Further, in this possible implementation, one piece of first activation state information being associated with one or more first positioning reference signal groups further includes that group ID information of the first positioning reference signal group is included in the first activation state information. There may be N pieces of first activation state information, each value representing one first activation state. Group ID information of a first positioning reference signal group included in each piece of the first activation state information may be the same or different. In other words, one first positioning reference signal group may be associated with one or more pieces of first activation state information.

(b) At least one piece of first activation state information, where one piece of first activation state information is associated with first positioning reference signals of one or more first unit resources, and the first unit resource includes at least the following: a positioning reference signal resource, a positioning reference signal resource set, a positioning reference signal resource corresponding to one TRP, and a positioning reference signal resource corresponding to one frequency layer.

That is, in this possible implementation, each first unit resource is configured with one piece of first activation state information; and in a case that one piece of first activation state information is indicated by the activation information, a positioning reference signal corresponding to a first unit resource associated with the first activation state information is activated. For example, the first activation state information may be a specific value, for example, 0, 1, 2, or 3, where a first unit resource associated with 0 is a positioning reference signal resource corresponding to a positioning reference signal resource set (resource set) a, a first unit resource associated with 1 is a positioning reference signal resource corresponding to a resource set b, a first unit resource associated with 2 is a positioning reference signal resource corresponding to a resource set c, and a first unit resource associated with 3 is a positioning reference signal resource corresponding to a resource set d. In this case, if downlink control information (Downlink Control Information, DCI) indicates a value of the first activation state information being 1, it indicates that the positioning reference signal corresponding to the resource set b is activated.

In another possible implementation, as each first unit resource is configured with one piece of first activation state information, a plurality of first unit resources possibly correspond to same first activation state information. In a case that the activation information indicates that one piece of the first activation time information is to be activated, one or a specific first positioning reference signal corresponding to a first unit resource associated with the first activation state information may be activated, or all first positioning reference signals corresponding to the first unit resource associated with the first activation state information may be activated. For example, the first activation state information may be a specific value, for example, 0, 1, 2, or 3, where a first unit resource associated with 0 is a positioning reference signal resource set (resource set) al, a positioning reference signal resource set (resource set) a2, and a positioning reference signal resource set (resource set) a3; a first unit resource associated with 1 is a resource set b1, a resource set b2, and a resource set b3; a first unit resource associated with 2 is a positioning reference signal resource corresponding to a resource set c; and a first unit resource associated with 3 is a positioning reference signal resource corresponding to a resource set d. In this case, if downlink control information (Downlink Control Information, DCI) indicates a value of the first activation state information being 1, it may indicate that the resource set b1, resource set b2, and resource set b3 are activated, or according to a protocol or other configuration signaling, one may be activated, for example, the resource set b 1, or more may be activated, for example, the resource set b 1 and the resource set b2. (c) At least one first activation state table, where the first activation state table is used to record an association relationship between the first activation state information and the first positioning reference signal groups.

In this possible implementation, the first activation state information is a list, and each member in the list is associated with one or more first positioning reference signal groups. Each member in the list indicates one piece of first activation state information, and may be a specific value or an ID, which is not specifically limited in this embodiment of this application. The one or more first positioning reference signal groups associated with each member may be indicated by a positioning reference signal group ID, or may be indicated by an ID of one or a group of first unit resources.

For example, optionally, one or more first positioning reference signal groups may be associated with one or a group of first sets, where the first set may include a positioning reference signal reporting set and/or a positioning reference signal resource set.

In a possible implementation, one first positioning reference signal group or the first activation state table may include configuration information of a third positioning reference signal group and/or identification information, where the third positioning reference signal group is a subset of the first positioning reference signal group, that is, the third positioning reference signal group may include part or all of positioning reference signals in the first positioning reference signal group.

In this possible implementation, the identification information may be identification information of the first positioning reference signal group, for example, identification information of one or more positioning reference signal groups associated with one member is recorded in the first activation state table. Alternatively, the identification information may be identification information of the third positioning reference signal group. For example, an entry is added to the first activation state table to record the identification information of the third positioning reference signal group, or the identification information of the third positioning reference signal group is added to configuration information of the first positioning reference signal group. Alternatively, the identification information may be the identification information of the first positioning reference signal group and identification information of the second positioning reference signal group. For example, the first activation state table records, under each member of the list, identification information of one or more associated first positioning reference signal groups and identification information of a third positioning reference signal group of a corresponding first positioning reference signal group. Alternatively, when one piece of first activation state information is associated with one or more first positioning reference signal groups, and the first positioning reference signal group is associated with one or a group of positioning reference signal reporting sets and/or positioning reference signal resource sets, the identification information may further indicate identification information of a specified positioning reference signal in one or a group of associated positioning reference signal reporting sets and/or positioning reference signal resource sets that are activated using the first activation state information. Alternatively, when one piece of first activation state information is associated with one first positioning reference signal group, the ID information may be an ID of one or a specific positioning reference signal in the first positioning reference signal group; or when one piece of first activation state information is associated with a plurality of first positioning reference signal groups, the ID information may be an ID of one or a specific first positioning reference signal group. In an embodiment, the one or specific first positioning reference signal group or the one or specific first positioning reference signal belongs to the third positioning reference signal group or includes the third positioning reference signal group. In this possible implementation, the configuration information of the third positioning reference signal group may be positioning reference signal resource information or a configuration window corresponding to the third positioning reference signal group or the like, and the terminal may determine, based on the third positioning reference signal group, a resource for monitoring the third positioning reference signal group. It should be noted that the determining the resource for monitoring the third positioning reference signal group may be understood as determining a positioning reference signal in the third positioning reference signal group, or determining the configuration information of the third positioning reference signal group, or determining how to monitor signals in the third positioning reference signal group. The understanding may alternatively be applicable to other similar descriptions. Further, the corresponding configuration information includes at least one of the following: period, muting parameter, number of repetitions, offset within a period, bandwidth information, frequency-domain offset information, time information, spatial direction indication information, transmission configuration indicator TCI indication information, quasi co-location QCL indication information, beam indication information, power information, MG configuration information, type of positioning reference signal, BWP information, transmission, stop of transmission, activation/deactivation flag, numerology (numerology), and time offset information (for example, cell time offset and/or TRP time offset). The terminal monitors the third positioning reference signal according to the configuration information of the third positioning reference signal group. In another possible implementation, the third positioning reference signal group is equal to the first positioning reference signal group, and the terminal determines, according to the configuration information of the third positioning reference signal group, to monitor signals in the first positioning reference signal group.

For another example, if the configuration information is a configuration window of the third positioning reference signal group, the terminal may monitor, on a time-domain resource corresponding to the configuration window, positioning reference signals in the third positioning reference signal group that come from the different TRPs, so as to quickly detect the positioning reference signals in the third positioning reference signal group that come from the different TRPs.

Optionally, the configuration information of the third positioning reference signal group may include at least one of the following (1.1) to (1.3):

(1.1) window length of the configuration window;
(1.2) time-domain offset information and/or period information of the configuration window; and
(1.3) configuration information of a positioning reference signal of the third positioning reference signal group in relation to the first configuration window, for example, an offset of the positioning reference signal relative to a starting position of the window, or a time offset that is calculated based on the window length and that is of the positioning reference signal relative to the starting position of the window, or other configuration information such as signal period or muting parameter.

In a case that one piece of first activation state information is associated with one or more first positioning reference signal groups and the first positioning reference signal is associated with one or a group of positioning reference signal reporting sets and/or positioning reference signal resource sets, a specific positioning reference signal may be selected from the one or a group of positioning reference signal reporting sets and/or positioning reference signal resource sets for activation. In other words, a specific positioning reference signal resource set, a positioning reference signal corresponding to a specific frequency layer, a positioning reference signal corresponding to a specific positioning reference signal resource, or the like is selected from the positioning reference signal reporting sets and/or positioning reference signal resource sets associated with the one piece of first activation state information. The specific positioning reference signal may alternatively be indicated by identification information of the one first positioning reference signal group or third positioning reference signal group or identification information included in the first activation state table, or may be indicated by higher-layer signaling, or may be indicated by a protocol.

For example, if one or a group of positioning reference signal reporting sets and/or positioning reference signal resource sets include a plurality of positioning reference signal resource sets (set), a plurality of positioning reference signal resources (resource), or a plurality of frequency layers of one TRP, the network-side device may activate only one or part of the positioning reference signal resource sets/positioning reference signal resources/frequency layers for transmission/reporting, for example, using higher-layer signaling to indicate which specific positioning reference signal is to be specifically activated, that is, to indicate a specific positioning reference signal resource set/positioning reference signal resource/frequency layer.

For example, if one or a group of positioning reference signal reporting sets and/or positioning reference signal resource sets include one or more positioning reference signal resource sets (set), one or more positioning reference signal resources (resource), or one or more frequency layers of a plurality of TRPs, the network-side device may activate only part of, a specific, or all of the TRPs. However, for the positioning reference signal resource sets/positioning reference signal resources/frequency layers, which set, resource, or frequency layer, or a set, resource, or frequency layer of which nature may be specifically activated by using higher-layer signaling or based on requirements.

For another example, when one piece of first activation state information is associated with one or more first positioning reference signal groups and the first positioning reference signal group is associated with one or more positioning reference signal reporting sets and/or positioning reference signal resource sets, all positioning reference signals in the positioning reference signal reporting sets or positioning reference signal resouce sets can be activated using one piece of activation signaling.

In the foregoing possible implementations, the specific positioning reference signal may be one of an aperiodic positioning reference signal, a semi-persistent positioning reference signal, and an on-demand positioning reference signal. The on-demand positioning reference signal may be an aperiodic positioning reference signal or a semi-persistent positioning reference signal, which is not specifically limited in this embodiment.

Further, in the foregoing possible implementations, the specific positioning reference signal may alternatively be one or a group of positioning reference signals. The group of PRSs (which may be also referred to as a trigger group) may have at least one of the following characteristics:

having a same time-domain type (periodic, aperiodic, or semi-persistent);
having a same BWP-ID;
having a same frequency layer;
having a same time-domain parameter, where the time-domain parameter may include at least one of the following: period, slot offset (slot offset), muting parameter (muting), and number of repetitions (repetition);
belonging to a same positioning reference signal resource set;
belonging to a same activation group set;
having a same group ID (group ID);
having a same resource parameter, where the resource parameter includes at least one of the following: beam (beam), beam group (beam group), resource set identifier (resource set ID), resource identifier (resource ID), and QCL information;
belonging to one or more first unit resources, where the first unit resource includes one of the following: a positioning reference signal resource, a positioning reference signal resource set, a positioning reference signal resource corresponding to one TRP (also referred to as one TRP), and a positioning reference signal resource corresponding to one frequency layer (also referred to as one frequency layer);
having a same reporting type;
having a same reporting configuration;
having a same measurement type;
having a same measurement configuration;
belonging to a same reporting group; and
belonging to a same measurement group.

In this possible implementation, different types of first positioning reference signals correspond to different activation state information, for example, semi-persistent first positioning reference signals correspond to semi-persistent activation state information, and aperiodic first positioning reference signals correspond to aperiodic activation state information.

For example, the activation state information of the semi-persistent first positioning reference signal may be a value being an integer between 1 to N or 0 to N, and a positioning reference signal in the corresponding state information may be activated using a corresponding bit, and the activation state information may be configured per TRP, or per positioning reference signal resource set, or per positioning reference signal resource, or per positioning reference signal group.

The activation state information of the aperiodic first positioning reference signal may also be a value being an integer between 1 to N or 0 to N, and a positioning reference signal in the corresponding state information may be activated using a corresponding bit, and the activation state information may also be configured per TRP, or per positioning reference signal resource set, or per positioning reference signal resource, or per positioning reference signal group.

(2) Period and time offset information, for example, period and offset information of a semi-persistent first positioning reference signal, where in a possible implementation, the time offset information is relative to a period.

(3) Time-domain offset information, where the time-domain offset information may include first time-domain offset information and second time-domain offset information, and the first time-domain offset information is an offset of transmission of a positioning reference signal relative to activation of the positioning reference signal, and the second time-domain offset information is an offset of reporting of the positioning reference signal relative to activation or transmission of the positioning reference signal.

In a possible implementation in this embodiment of this application, the first time-domain offset information may include at least one of the following (a) to (e).

(a) Time-domain offset information between activation signaling for the first positioning reference signal and a first specified positioning resource, where the first specified positioning resource includes one of the following: the 1st second unit resource of a predetermined first positioning reference signal, any second unit resource of the predetermined first positioning reference signal, and each second unit resource of the predetermined first positioning reference signal. The predetermined first positioning reference signal includes one of the following: one or a group of positioning reference signals specified in advance from the first positioning reference signals, one or a group of positioning reference signals determined from the first positioning reference signals according to a fixed rule, and one or a group of positioning reference signals determined from the first positioning reference signals according to protocol prescription. The second unit resource includes one of the following: a positioning reference signal resource, a positioning reference signal resource set, a frequency layer, a positioning reference signal resource set, a positioning reference signal resource corresponding to one TRP, and a positioning reference signal resource corresponding to an activation state table. In this possible implementation, the first time-domain offset information may be configured per second unit resource, for example, per PRS resource (resource)/per PRS resource set (resource set)/per PRS resource set (resource set)/per TRP/per frequency layer/per trigger list. The predetermined first positioning reference signal may be one or a group of positioning reference signals specified in advance, for example, one or a group of positioning reference signals corresponding to a specified positioning reference signal resource or positioning reference signal resource, or may be one or a group of positioning reference signals specified by the protocol, or may be one or a group determined from the first positioning reference signal according to a fixed rule, which is not specifically limited in this embodiment.

In this possible implementation, optionally, if the predetermined first positioning reference signal is a group of positioning reference signals and the first specified positioning resource is the 1st second unit resource of the predetermined first positioning reference signal, the first time-domain offset information may further include time-domain offset information of other second unit resources of the predetermined first positioning reference signal relative to the 1st second unit resource. In this possible implementation, the time-domain offset information of other second unit resources of the predetermined first positioning reference signal relative to the 1st second unit resource is configured, so that the terminal can obtain time-domain offset information of each second unit resource of the predetermined first positioning reference signal relative to the activation signaling for the first positioning reference signal.

In another possible implementation, if the predetermined first positioning reference signal is a group of positioning reference signals and the first specified positioning resource is any second unit resource of the predetermined first positioning reference signal, the first time-domain offset information may further include time-domain offset information of other second unit resources of the predetermined first positioning reference signal relative to the any second unit resource. In this possible implementation, the time-domain offset information of other second unit resources of the predetermined first positioning reference signal relative to the any second unit resource is configured, so that the terminal can obtain time-domain offset information of each second unit resource of the predetermined first positioning reference signal relative to the activation signaling for the first positioning reference signal.

(b) Time-domain offset information between activation signaling for the first positioning reference signal and a second specified positioning resource, where the second specified positioning resource is one of the following: any second unit resource of the first positioning reference signal and the 1st second unit resource of any positioning reference signal group; and the positioning reference signal group includes one or more first positioning reference signals.

In this possible implementation, optionally, if the second specified positioning resource is the 1st second unit resource of any positioning reference signal group, the first time-domain offset information may further include time-domain offset information of other second unit resources of the any positioning reference signal group relative to the 1st second unit resource.

In this possible implementation, the other positioning reference signals and the 1st positioning reference signal have slot offsets relative to the 1st positioning reference signal (which may be the 1st positioning reference signal that is activated simultaneously, or may be the 1st positioning reference signal resource/positioning reference signal resource set/positioning reference signal resource set/TRP/frequency layer/per trigger list in the positioning reference signal group). For example, if the first time-domain offset information is configured per resource set (that is, the second unit resource is a positioning reference signal resource set), the first time-domain offset information further includes a time-domain offset of each resource in the resource set relative to the resource set. For another example, if the first time-domain offset information is configured per resource set (that is, the second unit resource is a positioning reference signal resource set), the first time-domain offset information further includes a time-domain offset of each positioning reference signal resource or positioning reference signal resource set relative to the resource set.

Alternatively, if the second specified positioning resource is any second unit resource of any positioning reference signal group, the first time-domain offset information may further include time-domain offset information of other second unit resources of the any positioning reference signal group relative to the any second unit resource.

(c) Time-domain offset information between activation signaling for the first positioning reference signal and a third specified positioning resource, where the third specified positioning resource includes one of the following: all second unit resources of any one of the first positioning reference signals and all second unit resources of any positioning reference signal group. That is, the first time-domain offset information is configured per resource/PRS resource set/PRS resource set/TRP/per trigger list, and the first time-domain offset information includes a time-domain offset of the activation signaling for the first positioning reference signal relative to any one or any group of second unit resources.

(d) Time-domain offset information between activation signaling for the first positioning reference signal and a fourth specified positioning resource, where the fourth specified positioning resource includes one of the following: all second unit resources of one first positioning reference signal in a serving cell or reference TRP, the 1st second unit resource of one first positioning reference signal in a serving cell or reference TRP, any second unit resource of one first positioning reference signal in a serving cell or reference TRP, all second unit resources of any positioning reference signal group in a serving cell or reference TRP, the 1 st second unit resource of any positioning reference signal group in a serving cell or reference TRP, and any second unit resource of any positioning reference signal group in a serving cell or reference TRP.

In this possible implementation, the first time-domain offset information may further include offset information of other cells or other TRPs relative to the serving cell or reference TRP. The offset information includes time-domain offset information and/or system frame number (System Frame Number, SFN) offset.

(e) Time-domain offset information between activation signaling for the first positioning reference signal and a second configuration window, where the second configuration window is a subset of a first configuration window, and the first configuration window is a configuration window indicated in the configuration information of the first positioning reference signal. The second configuration window being a subset of the first configuration window may be understood as being one of the first configuration windows, or may be understood that the second configuration window is associated with the first configuration window or inherits some characteristics of the first configuration window. In a possible embodiment, the second configuration window is activated by the activation signaling for the first positioning reference signal, and time-domain offset information between the activation signaling for the first positioning reference signal and the second configuration window may be configuration information of the first configuration window, or may be carried in the activation information. The second configuration window being activated by the activation signaling for the first positioning reference signal may be understood as activating a positioning reference signal in the second configuration window. The configuration information of the second configuration window is similar to the configuration information of the first configuration window, and therefore a configuration method for the positioning reference signal in the second configuration window may be similar to a configuration method for the positioning reference signal in the first configuration window.

In this possible implementation, the window length information of the first configuration window may be further configured. In this possible implementation, the network-side device may determine, during configuration, that the positioning reference signal to be measured falls within the first configuration window.

It should be noted that the first time-domain offset may be configured using one piece of configuration information, or may be configured using a plurality of pieces of configuration information, or may be jointly configured using both activation information and configuration information. In a possible embodiment, the configuration information includes a time-domain offset between the predetermined first positioning reference signal and other first positioning reference signals, and the activation information includes a time-domain offset between the activation signaling and the predetermined first positioning reference signal. In another possible embodiment, the configuration information includes a time-domain offset between the first positioning reference signal and the first configuration window, and the activation information includes a time-domain offset between the activation signaling and the first configuration window. The foregoing other solutions may also have similar implementation processes, and details are not described herein.

In a possible implementation, the second time-domain offset information is time-domain offset information of activating reporting. The second time-domain offset information may include at least one of the following (a) to (c).

(a) Time-domain offset information between the activation command sent for activating the first positioning reference signal and a target positioning reference signal report, where the target positioning reference signal report is a positioning reference signal report of one or more positioning reference signals in the first positioning reference signals.

For example, the second time-domain offset information is time-domain offset information between the activation signaling (such as DCI or feedback information HARQ for PDSCH (or MAC CE, RRC, LPP)) and the PRS report (Report), that is, time-domain offset information, for example, slot offset, between the activation signaling and a reporting resource (for example, PUCCH or PUSCH) of the PRS report. Optionally, the slot offset may be 0, ..., or 32.

In this possible implementation, the target positioning reference signal report is part or all of positioning reference signal reports of the first positioning reference signals.

(b) Time-domain offset information between a time at which the first positioning reference signal is activated and the target positioning reference signal report.

Optionally, the time at which the first positioning reference signal is activated may include at least one of the following:

i. an operation result of a predetermined function using the first time-domain offset information between the activation time of the first positioning reference signal and the first positioning reference signal as a parameter, for example, the activation time of the first positioning reference signal plus the first time-domain offset information is the time at which the first positioning reference signal is activated, where certainly, it is not limited thereto, and in practice, it may be another operation result using the first time-domain offset information between the activation time of the first positioning reference signal and the first positioning reference signal as a parameter, for example, a sum function of the first time-domain offset information that is between the activation time of the first positioning reference signal and the first positioning reference signal and that is corresponding to a numerology for receiving the activation command; for another example, a sum function of the first time-domain offset information that is between the activation time of the first positioning reference signal and the first positioning reference signal and that is corresponding to a numerology for sending the reporting information; and as described above, the activation time of the first positioning reference signal is a time of DCI for activating the first positioning reference signal or a time for transmitting the feedback information HARQ of PDSCH;

ii. a time for sending the 1st activated first positioning reference signal; and

iii. a time for sending the last activated first positioning reference signal.

(c) Time-domain offset information between the activation command for reporting of the second positioning reference signal and the target positioning reference signal report.

In a possible implementation, the second time-domain offset information includes at least one of the following (a) to (c).

(a) Time-domain offset information of the positioning reference signal report relative to a fifth specified positioning resource, where the fifth specified positioning resource includes one of the following: all third unit resources of one first positioning reference signal, the 1st third unit resource of one first positioning reference signal, any third unit resource of one first positioning reference signal, all third unit resources of one positioning reference signal group, the 1st third unit resource of one positioning reference signal group, and any one third unit resource of one positioning reference signal group; and the third unit resource includes one of the following: a positioning reference signal resource, a positioning reference signal resource set, a positioning reference signal resource set, a positioning reference signal reporting set, a positioning reference signal resource corresponding to one TRP, a positioning reference signal resource corresponding to one frequency layer, and a positioning reference signal resource corresponding to one activation state information table.

That is, in this possible implementation, the second time-domain offset information is configured per third unit resource, where the third unit resource being a positioning reference signal resource corresponding to one TRP means that the second target offset information is configured in unit of TRP, that is, one piece of second time-domain offset information is configured for positioning reference signal resources corresponding to each TRP; the third unit resource being a positioning reference signal resource corresponding to one frequency layer means that the second target offset information is configured in unit of frequency layer, that is, one piece of second time-domain offset information is configured for positioning reference signals corresponding to each frequency layer; and the third unit resource being a positioning reference signal resource corresponding to one activation state information entry means that the second target offset information is configured in unit of activation state information entry, that is, one piece of second time-domain offset information is configured for positioning reference signals corresponding to each activation state information entry.

In actual application, positioning reference signals for which reporting is activated by the activation information may include a plurality of first positioning reference signals, and different second time-domain offsets may be configured for different first positioning reference signals in the plurality of first positioning reference signals. The terminal selects, according to a first rule, one piece of second time-domain offset information to perform reporting of the positioning reference signal report.

Optionally, the first rule includes but is not limited to at least one of the following:

i. selecting second time-domain offset information indicated in a received downlink command, where, for example, second time-domain offset information indicated in DCI or indicated in MAC CE;

ii. selecting second time-domain offset information having a largest offset among a plurality of pieces of second time-domain offset information; and

iii. selecting second time-domain offset information having a largest offset among a plurality of pieces of second time-domain offset information indicated in a received downlink command.

(b) Time-domain offset information of the target positioning reference signal report relative to a sixth specified positioning resource, where the sixth specified positioning resource includes one of the following: any third unit resource of one first positioning reference signal in a serving cell or reference TRP, all third unit resources of one first positioning reference signal in a serving cell or reference TRP, the 1st third unit resource of one first positioning reference signal in a serving cell or reference TRP, all third unit resources of one positioning reference signal group in a serving cell or reference TRP, the 1st third unit resource of one positioning reference signal group in a serving cell or reference TRP, and any third unit resource of one positioning reference signal group in a serving cell or reference TRP; and the target positioning reference signal report is a positioning reference signal report of one or more positioning reference signals in the first positioning reference signals.

For example, the second time-domain offset information is time-domain offset information between a PRS report (reporting resource PUCCH or PUSCH) and all of or the 1st or any one of PRS resource/PRS resource set/PRS resource set/TRP/frequency layer in one PRS or PRS group in the serving cell or reference TRP.

(c) Time-domain offset information of the target positioning reference signal report relative to a starting point or an ending point of a third configuration window, where the third configuration window is a subset of the first configuration window, and the first configuration window is a configuration window indicated in the configuration information of the first positioning reference signal.

In a possible implementation, an absolute time of the target positioning reference signal report is provided.

(4) Starting position information for sending the first positioning reference signal, for example, starting position information for sending a semi-persistent positioning reference signal, for example, corresponding starting position information relative to different cells.

In the foregoing possible implementations, one piece of activation state information is associated with one or more first positioning reference signals; or one piece of activation state information is associated with one or more first unit resources, where the first unit resource includes at least one of the following: a positioning reference signal resource corresponding to one TRP, one positioning reference signal resource, one positioning reference signal resource set, one positioning reference signal resource group, and a positioning reference signal reporting set.

In a possible implementation, the activation information of the second positioning reference signal includes at least one of the following (1) to (7):

(1) ID information of the second positioning reference signal, where the ID information of the second positioning reference signal may include at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, and BWP ID information.

(2) Activation time information, where the activation time information may include an activation time and/or time-domain offset information of the second positioning reference signal, and the activation time may be a time for sending the activation information. For example, if the activation information of the second positioning reference signal is sent using UCI, the activation time is a time for receiving the UCI; and if the activation information of the second positioning reference signal is sent using MAC CE, RRC, or LPP, the activation time is a time for receiving feedback information HARQ for MAC CE, RRC, or LPP. The time-domain offset information may include first time-domain offset information and/or second time-domain offset information, where the first time-domain offset information indicates a slot offset between transmission of a second positioning reference signal and activation, and the second time-domain offset information indicates a slot offset between reporting of the second positioning reference signal and activation. In addition, the time-domain offset information may further include one or more of a cell time offset, a TRP time offset, a PRS configuration time offset, a slot offset of a PRS period, and time information for cross-carrier scheduling.

(3) Configuration information of the second positioning reference signal, where the configuration information of the second positioning reference signal may include at least one of the following: period, muting parameter, number of repetitions, offset within a period, bandwidth information, frequency-domain offset information, time information, spatial direction indication information, TCI indication information, QCL indication information, beam indication information, power information, MG configuration information, type of positioning reference signal, BWP information, transmission, stop of transmission, and activation/deactivation flag.

(4) Type information of the second positioning reference signal, where, for example, the second positioning reference signal is indicated to be a periodic, aperiodic, semi-persistent, or on-demand positioning reference signal.

(5) Configuration information of a first target BWP, where the configuration information of the first target BWP may indicate the first target BWP, that is, a target BWP for sending the second positioning reference signal.

(6) Reporting information of a ninth positioning reference signal, where the ninth positioning reference signal is a subset of the second positioning reference signal; and the reporting information may include information such as a reporting type, a reporting period, and a reporting group of the ninth positioning reference signal.

(7) First target configuration window information, where the first target configuration window information includes at least one of the following: configuration information of a first target search window, configuration information of a first target measurement window, configuration information of a first target MG, and configuration information of a first target reporting window for the second positioning reference signal.

Optionally, the activation information of the second positioning reference signal may be sent on a physical uplink control channel (PUCCH) or a physical uplink shared channel (PUSCH), or using an uplink signal.

In a possible implementation, the request information for the third positioning reference signal may be used for at least one of the following:

(1) Requesting configuration information of the third positioning reference signal.

Optionally, the third positioning reference signal may be a first positioning reference signal, that is, the request information for the third positioning reference signal is used to request the network-side device to configure the configuration information of the first positioning reference signal.

Alternatively, the third positioning reference signal may be a subset of the first positioning reference signal, or the third positioning reference signal may include the first positioning reference signal or be unrelated to the first positioning reference signal.

(2) Requesting activation of the third positioning signal using the activation information of the third positioning reference signal.

Optionally, the third positioning reference signal may be a second positioning reference signal, that is, the request information for the third positioning reference signal is used to request the network-side device to activate the second positioning reference signal. For example, the network-side device is requested to activate the second positioning reference signal according to the activation information of the second positioning reference signal. For another example, ID information included in the activation information for activating the second positioning reference signal corresponds to the second positioning reference signal.

Alternatively, the third positioning reference signal may be a subset of the second positioning reference signal, or the third positioning reference signal may include the second positioning reference signal. Certainly, the third positioning reference signals and the second positioning reference signals may have some same positioning reference signals, or the third positioning reference signals and the second positioning reference signals may have no same positioning reference signals. This is not specifically limited in this embodiment of this application.

Optionally, the second positioning reference signal or/and the third positioning reference signal includes one of the following: an aperiodic positioning reference signal, a semi-persistent periodic positioning reference signal, and an on-demand positioning reference signal.

In a possible implementation in this embodiment of this application, the second positioning reference signal may include one of the following: one or more first positioning reference signals, one or more groups of first positioning reference signals, one or more third positioning reference signals, and one or more groups of third positioning reference signals.

In another possible implementation in this embodiment of this application, the third positioning reference signal may include one of the following: one or more first positioning reference signals, one or more groups of first positioning reference signals, one or more second positioning reference signals, and one or more groups of second positioning reference signals.

In a possible implementation, first positioning reference signals in a group of first positioning reference signals, second positioning reference signals in a group of second positioning reference signals, or third positioning reference signals in a group of third positioning reference signals may satisfy at least one of the following:

(1) having a same time-domain type of signal, for example, all being periodic positioning reference signals, or all being aperiodic positioning reference signals, or all being semi-persistent positioning reference signals;

(2) having a same bandwidth part BWP (Bandwidth Part, BWP) identifier, that is, identifiers of BWPs being the same;

(3) having a same frequency layer;

(4) having a same time-domain parameter, where the time-domain parameter includes at least one of the following: period, slot offset, muting parameter, and number of repetitions;

(5) belonging to a same positioning reference signal resource set (resource set);

(6) belonging to a same activation group set;

(7) having a same group ID (group ID);

(8) having a same resource parameter, where the resource parameter includes at least one of the following: beam, beam group, resource set ID, resource ID, and QCL information;

(9) belonging to one or more first unit resources, where the first unit resource includes one of the following: a positioning reference signal resource, a positioning reference signal resource set, a positioning reference signal resource corresponding to one TRP, and a positioning reference signal resource corresponding to one frequency layer;

(10) having a same reporting type;

(11) having a same reporting configuration;

(12) having a same measurement type;

(13) having a same measurement configuration;

(14) belonging to a same reporting group; and

(15) belonging to a same measurement group.

In a possible implementation, when the request information for the third positioning reference signal is used to request to configure the third positioning reference signal, the request information for the third positioning reference signal includes at least one of the following:

(1) ID information of the third positioning reference signal, where, optionally, the ID information includes at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, BWP ID information, and activation state information;

(2) configuration information corresponding to the ID information or the configuration information, where the corresponding configuration information or the configuration information includes at least one of the following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal (for example, periodic, aperiodic, or on-demand PRS), BWP information, transmission, stop of transmission, and activation/deactivation flag;

(3) terminal-expected configuration information, where the expected configuration information includes at least one of the following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, and BWP information; and a corresponding configuration may be requested from the network-side device based on the terminal-expected configuration information;

(4) positioning requirement information, where the positioning requirement information includes at least one of the following: positioning precision, positioning delay, positioning power, positioning method, and positioning reliability;

(5) configuration validation time information or configuration time information;

(6) a request for time information;

(7) a request for configuration information of a second target configuration window, where the configuration information of the second target configuration window may include at least one of the following: configuration information of a second target search window, configuration information of a second target measurement window, configuration information of a second target MG, and configuration information of a second target reporting window of the third positioning reference signal; and

(8) configuration information of a second target BWP, indicating a target BWP in which the third positioning signal is located.

In this embodiment, optionally, the request information for the third positioning reference signal includes a request for configuration information of the second target configuration window, for requesting a configuration of a corresponding configuration window. For another example, if the request information for the third positioning reference signal includes bandwidth information but includes no ID information, it indicates that a bandwidth for the positioning reference signal requested is the bandwidth information. If both the bandwidth information and the ID information are included, it indicates that bandwidth information for the corresponding ID requested is the bandwidth information. The logic may also be used for other configuration information. For another example, if the request information for the third positioning reference signal includes positioning requirement information, the positioning reference signal configured or sent by the network side is expected to meet the positioning requirement information.

In another possible implementation, when the request information for the third positioning reference signal is used to request to activate the third positioning reference signal, the request information for the third positioning reference signal includes at least one of the following:

(1) ID information of the third positioning reference signal, where, optionally, the ID information includes at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, and BWP ID information;

(2) activation time information, where, optionally, the activation time information may include at least one of the following: transmission time information (indicating a transmission time of the third positioning reference signal), configuration time information, measurement time information, and time information of a measurement result reporting resource;

(3) configuration information of the third positioning reference signal, where, optionally, the configuration information of the third positioning reference signal may be at least one of the following: period, muting parameter, number of repetitions, offset within a period, bandwidth information, frequency-domain offset information, time information, spatial direction indication information, TCI indication information, QCL indication information, beam indication information, power information, MG configuration information, type of positioning reference signal, BWP information, transmission, stop of transmission, and activation/deactivation flag;

(4) type information of the third positioning reference signal, where, for example, the third positioning reference signal is a periodic, aperiodic, semi-persistent, or on-demand positioning reference signal.

(5) positioning requirement information;

(6) reporting information of a tenth positioning reference signal, where the tenth positioning reference signal is a subset of the third positioning reference signal;

(7) third target configuration window information;

(8) ID information of the third positioning reference signal expected to be activated, where, optionally, the ID information may include at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, and BWP ID information;

(9) expected activation time information, where the activation time information includes but is not limited to at least one of the following: transmission time information, configuration time information, measurement time information, and time information of a measurement result reporting resource;

(10) expected configuration information of the third positioning reference signal, where, optionally, the expected configuration information of the third positioning reference signal includes but is not limited to at least one of the following: period, muting parameter, number of repetitions, offset within a period, bandwidth information, frequency-domain offset information, time information, spatial direction indication information, TCI indication information, QCL indication information, beam indication information, power information, MG configuration information, type of positioning reference signal, BWP information, transmission, stop of transmission, and activation/deactivation flag;

(11) expected type information of the third positioning reference signal;

(12) expected information about the third target configuration window, where the configuration information of the third target configuration window includes at least one of the following: configuration information of a third target search window, configuration information of a third target measurement window, configuration information of a third target MG, and configuration information of a third target reporting window of the third positioning reference signal; and

(13) a third target BWP.

In this embodiment, optionally, the request information for the third positioning reference signal includes only the ID information of the third positioning reference signal, for requesting transmission of the third positioning reference signal. For another example, the request information for the third positioning reference signal further includes activation time information indicating at what time the third positioning reference signal is activated or sent. For another example, the request information for the third positioning reference signal includes configuration information of the second target configuration window, for requesting activation of a corresponding configuration window or activation of both a corresponding configuration window and a corresponding positioning reference signal in the configuration window. Further, the ID information of the third positioning reference signal may be used to indicate the corresponding positioning reference signal.

In a possible implementation, in a case that the activation information of the second positioning reference signal or the request information for the third positioning reference signal includes at least two of the following, a mapping relationship is present between the at least two: ID information corresponding to the second positioning reference signal or third positioning reference signal, a target BWP (including a first target BWP, a second target BWP, or a third target BWP), and configuration information of a target configuration window (including a first target configuration window, a second target configuration window, or a third target configuration window). The mapping relationship may be: period being the same or a multiple relationship being present, or the second positioning reference signal or the third positioning reference signal being located in the target configuration window, or activation times being the same, or activated time windows having an intersection or overlapping, or the like.

In a possible implementation, the sending, by the terminal, first information includes one of the following:

(1) sending, by the terminal, the first information on a physical uplink control channel (PUCCH);
(2) sending, by the terminal, the first information on a physical uplink shared channel (PUSCH);
(3) having, by the terminal, the first information carried in an uplink information for sending; and
(4) having, by the terminal, carried in the first information to uplink signaling for transmission.

Optionally, the uplink signaling includes at least one of the following: UCI, MAC CE, RRC signaling, and LPP signaling.

In a possible implementation, the uplink signaling includes at least one of the following:

(1) First bit string, where each bit in the first bit string or each second bit string in the first bit string is used to indicate activating or requesting a target positioning reference signal, and the target positioning reference signal includes the second positioning reference signal or the third positioning reference signal. A length of the first bit string is N times a length of the second bit string, and N is a common divisor of the number of target reference signals activated or requested or a common divisor of the number of groups of target reference signals to be activated or requested. In an optional embodiment, N is a common divisor of the number of or the number of groups of activated or requested target reference signals, and if the number of or the number of groups of activated or requested target reference signals is 16, N may be 1, 2, 4, 8, or 16.
(2) First indication information, where the first indication information indicates that the activation information of the second positioning reference signal is for activating the second positioning reference signal, or the first indication information indicates that the activation information of the second positioning reference signal is for deactivating the second positioning reference signal, or the first indication information indicates that the request information for the third positioning reference signal is for requesting configuration or activation of the third positioning reference signal.
(3) Second bit string, used for indicating a third target MG to be activated or requested; where the third target MG includes the first target MG and/or the second target MG.
(4) Third bit string, used for indicating a fourth target BWP to be activated or to be switched to; where the fourth target BWP includes the first target BWP and/or the second target BWP.
(5) Fourth bit string, used for indicating a fourth target configuration window to be activated or requested, where the fourth target configuration window includes the first target configuration window and the third target configuration window described above.

Optionally, one or more pieces of the uplink signaling may be used to activate a plurality of target objects; and/or different types of positioning reference signals (for example, periodic, semi-persistent, aperiodic, or on-demand positioning reference signals) are activated and/or deactivated and/or requested using different uplink signaling. For example, DCI for activating different types of positioning reference signals is different, or DCI for activating a same type of positioning reference signals is different from DCI for deactivating the positioning reference signals.

Optionally, when the first information is sent on the PUCCH, at least one of the following is satisfied:

(1) A BWP for sending the PUCCH is an active BWP.
(2) The PUCCH occupies a specific PUCCH resource, and may be used for sending a PRS-request (activation information of the second positioning reference signal).
(3) If a plurality of pieces of multiplexed signaling are present on the PUCCH resource, the plurality of pieces of signaling include at least one of the following: HARP, SR, CSI, and first information (including the activation information of the second positioning reference signal and/or the request information for the third positioning reference signal), and the multiplexing rule is optionally any combination of HARQ, SR, CSI, and first information.

(4) If the plurality of PUCCH resources can be selected for uploading the first information, the first information is uploaded onto a low-priority PUCCH.
(5) The first information is included in UCI.
(6) The PUCCH is scrambled by a specific RNTI, for example, A-PRS-RNTI, MG-RNTI, SP-PRS-RNTI, or on-demand-PRS-RNTI, where scrambling using different RNTIs helps distinguish which type of positioning reference signal is to be activated.

Optionally, when PRS-request information is sent on the PUSCH, at least one of the following is satisfied:

(1) A BWP for sending the PUSCH is an active BWP.
(2) The PUSCH occupies a specific PUSCH resource, where the specific PUSCH resource may be used for sending positioning reference signal request information (PRS-request).
(3) The first information is multiplexed to a PUSCH, and the first information may be multiplexed to a PUSCH by using UCI, MAC CE, RRC, or LPP.
(4) The first information may be obtained through parsing mixed information of UCI and other information, such as both UCI and MAC CE, and the mixed information may be transmitted on one or more PUSCHs.

Optionally, when the first information (including the activation information of the second positioning reference signal and/or the request information for the third positioning reference signal) is included in a MAC CE, the MAC CE may include at least the following information:

(1) ID information of the second positioning reference signal and/or the third positioning reference signal, where, optionally, the ID information includes at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, BWP ID information, and serving cell ID. The resource set or the resource ID information may be at least one of the following: a PRS ID, a PRS resource ID, a PRS resource set ID, and a TRP ID.
(2) Configuration information of the second positioning reference signal and/or the third positioning reference signal, where, optionally, the configuration information may be at least one of the following: period, muting parameter, number of repetitions, offset within a period, bandwidth information, frequency-domain offset information, time information, spatial direction indication information, TCI indication information, QCL indication information, beam indication information, power information, MG configuration information, type of positioning reference signal, BWP information, transmission, stop of transmission, and activation/deactivation flag.
(3) Activation time information, where, optionally, the activation time information may include at least one of the following: transmission time information (indicating a transmission time of the third positioning reference signal), configuration time information, measurement time information, and time information of a measurement result reporting resource.
(4) Filtering indicator of the positioning reference signal, where, for example, each filtering indicator T may represent one or a group of PRSs, and a bit value of the filtering indicator indicates whether to activate a PRS corresponding to the filter indicator.

In the foregoing optional implementations, there may be one or more MAC CEs, where one MAC CE may be for activating a plurality of messages; and/or different types of PRSs (periodic, semi-persistent, aperiodic, on demand) are activated, deactivated, or requested using different MAC CEs.
Optionally, when the first information (including the activation information of the second positioning reference signal and/or the request information for the third positioning reference signal) is included in RRC and/or LPP, the RRC and/or the LPP may include at least the following information:

(1) ID information of the second positioning reference signal and/or the third positioning reference signal, where, optionally, the ID information includes at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, BWP ID information, and serving cell ID, where the resource set or the resource ID information may be at least one of the following: a PRS ID, a PRS resource ID, a PRS resource set ID, and a TRP ID.
(2) Configuration information of the second positioning reference signal and/or the third positioning reference signal, where, optionally, the configuration information may be at least one of the following: period, muting parameter, number of repetitions, offset within a period, bandwidth information, frequency-domain offset information, time information, spatial direction indication information, TCI indication information, QCL indication information, beam indication information, power information, MG configuration information, type of positioning reference signal, BWP information, transmission, stop of transmission, and activation/deactivation flag. The configuration information may be configuration information of the second positioning reference signal and/or third positioning reference signal (for example, configuration information configured by an LMF) or may be reconfiguration information of the second positioning reference signal and/or third positioning reference signal, or may include configuration information that is of the second positioning reference signal and/or third positioning reference signal and that the terminal expects to change. The configuration information expected to change is configuration information of part or all of positioning reference signals. Optionally, at least one of the following is included: period and offset, aperiodic offset (slot offset), spatial relation information/TCI/QCL, and bandwidth/carrierBWP.

(3) The activation, requesting, and/or deactivation information of the positioning reference signal expected to be measured, configured, and/or sent may include, for example, at least one of the following:

(3.1) ID information of a positioning reference signal expected to be measured, configured, and/or sent, where, for example, the ID information may include at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, BWP ID information, and serving cell ID, where the resource set or the resource ID information may be at least one of the following: a PRS ID, a PRS resource ID, a PRS resource set ID, and a TRP ID;

(3.2) configuration information of the positioning reference signal expected to be measured, configured, and/or sent, where, optionally, the configuration information may be at least one of the following: period, muting parameter, number of repetitions, offset within a period, bandwidth information, frequency-domain offset information, time information, spatial direction indication information, TCI indication information, QCL indication information, beam indication information, power information, MG configuration information, type of positioning reference signal, BWP information, transmission, stop of transmission, and activation/deactivation flag; and

(3.3) activation time information of the positioning reference signal expected to be measured, where, optionally, the activation time information may include at least one of the following: transmission time information, configuration time information, measurement time information, and time information of a measurement result reporting resource.

In still another possible implementation, the first information may be included in a reference signal and then sent, where the reference signal carries one of the following information: request information for an aperiodic positioning reference signal, request information for a semi-persistent positioning reference signal, request information for an on-demand positioning reference signal, activation information of an aperiodic positioning reference signal, activation information of a semi-persistent positioning reference signal, activation information of an on-demand positioning reference signal, deactivation information of an aperiodic positioning reference signal, deactivation information of a semi-persistent positioning reference signal, and deactivation information of an on-demand positioning reference signal.

In another possible implementation, the activation information of the second positioning reference signal or the request information for the third positioning reference signal is used to request, activate, or deactivate at least one of the following: transmission of the second positioning reference signal, activation of the second positioning reference signal, configuration of the second positioning reference signal, measurement of the second positioning reference signal, configuration of the first positioning reference signal, transmission of the first positioning reference signal, activation of the first positioning reference signal, configuration of the third positioning reference signal, transmission of the third positioning reference signal, activation of the third positioning reference signal, and measurement of the third positioning reference signal.

In a possible implementation, the first information is further used to request, configure, activate, or deactivate a reporting resource.

Optionally, the activation information of the second positioning reference signal and/or the request information for the third positioning reference signal is further used to request, configure, activate, or deactivate the reporting resource.

Optionally, the activation information of the second positioning reference signal and/or the request information for the third positioning reference signal being further used to request, configure, activate, or deactivate the reporting resource includes at least one of the following:

using a positioning reference signal request information field to indicate requesting a reporting resource, where the positioning reference signal request information field is used to request configuration, request or activation of the third positioning reference signal;

using a resource request field and a positioning request information field to indicate requesting a reporting resource;
using a pre-configured resource indication or a pre-configured resource ID to request a reporting resource;
using a buffer resource request to indicate requesting a reporting resource;
using the activation information of the second positioning reference signal to request a reporting resource;
using the request information for the third positioning reference signal to request a reporting resource; and
using positioning reference signal reporting resource request information to request a reporting resource.

Optionally, the activation information of the second positioning reference signal and/or the request information for the third positioning reference signal is further used to request, activate, or deactivate the reporting resource. Optionally, the reporting resource includes at least one of the following: a reporting resource for a measurement result of a thirteenth positioning reference signal, a reporting resource for a measurement result of the second positioning reference signal, and a reporting resource for a measurement result of the third positioning reference signal, where the thirteenth positioning reference signal may be a subset of the second positioning reference signal or a subset of the third positioning reference signal.

In the foregoing possible implementations, requesting a reporting resource using the first information includes at least one of the following:

(1) using a positioning reference signal request information field to indicate requesting a reporting resource, where the positioning reference signal request information field is used to request configuration, request or activation of the third positioning reference signal; for example, the configuration, requesting, or activation of the third positioning reference signal is requested using one piece of UCI, and a positioning reference signal request information (PRS-request) field in the UCI is used to indicate requesting a reporting resource;
(2) using a resource request field and a positioning request information field to indicate requesting a reporting resource;
(3) using a pre-configured resource indication or a pre-configured resource ID to request a reporting resource;
(4) using a buffer resource request to indicate requesting a reporting resource;
(5) using the activation information of the second positioning reference signal to request a reporting resource;
(6) using the request information for the third positioning reference signal to request a reporting resource; and
(7) using positioning reference signal reporting resource request information to request a reporting resource, where, for example, the positioning reference signal reporting resource request information is carried in UCI to request a reporting resource.

In a case that the first information is further used to request, configure, activate, or deactivate a reporting resource, optionally, the first information may further include at least one of the following:

(1) ID information of an eleventh positioning reference signal, for indicating reporting measurement information of the eleventh positioning reference signal; where the eleventh positioning reference signal may be a subset of the second positioning reference signal, or may be a subset of the third positioning reference signal; and
(2) configuration information or activation information of the reporting resource, where, for example, the configuration information or the activation information of the reporting resource may be carried in uplink signaling.

Optionally, requesting a reporting resource using the first information includes requesting at least one of the following information of the reporting resource: a resource size, a target time of resource, a target period of resource, and a resource type.

In a possible implementation, before the terminal sends the first information, the method further includes: receiving, by the terminal, second information sent by a network-side device or a core network device.

In this possible implementation, the core network device may be an LMF entity or a location server.

In the foregoing possible implementation, the terminal sends the first information after receiving the second information, that is, the terminal performs S210 after S212.

In the foregoing possible implementations, the second information received by the terminal is similar to the first information, and optionally, the configuration information of the fifth positioning reference signal may include at least one of the following:

(1) ID information of the fifth positioning reference signal, where the ID information includes at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, measurement gap (Measurement gap, MG) ID information, and bandwidth part (Bandwidth Part, BWP) ID information.

(2) Configuration information corresponding to the ID information, where the corresponding configuration information includes at least one of the following: period, muting parameter, number of repetitions, offset within a period, bandwidth information, frequency-domain offset information, time information, spatial direction indication information, transmission configuration indicator TCI indication information, quasi co-location QCL indication information, beam indication information, power information, MG configuration information, type of positioning reference signal, BWP information, transmission, stop of transmission, activation/deactivation flag, numerology (numerology), and time offset information. The type of positioning reference signal includes at least one of the following: a periodic positioning reference signal, an aperiodic positioning reference signal, a semi-persistent positioning reference signal, and an on-demand positioning reference signal (which may be aperiodic or semi-persistent). If the ID information includes a TRP identifier, the time offset information includes TRP time offset information corresponding to the TRP identifier, or the time offset information may include cell time offset information.

(3) Positioning method indication information.

(4) Precision requirement information.

(5) Configuration information of a second configuration window, where, optionally, the configuration information of the second configuration window may include at least one of the following: configuration information of the fifth positioning reference signal in relation to the second configuration window, configuration information of the selected positioning reference signal in relation to the second configuration window, start time information of the second configuration window, window length information of the second configuration window, period information for the second configuration window, and pattern (pattern) of the second configuration window. The second configuration window includes at least one of the following: a search window, a measurement window, a measurement gap (MG), and a reporting window. MG configuration information may include at least one of the following: gap pattern, gap period, gap offset information, and gap length.

(6) Discontinuous reception (Discontinuous Reception, DRX) configuration information.

(7) Positioning reference signal reporting set ID.

(8) Indication information of whether to be multiplexed with other signals.

(9) Configuration information of a multiplexed signal.

(10) Priority indication information of the fifth positioning reference signal.

In addition, the activation information of the sixth positioning reference signal is similar to the activation information of the second positioning reference signal, the request information for the seventh positioning reference signal is similar to the request information for the third positioning reference signal, and the first indication information of the eighth positioning reference signal is similar to the first indication information of the fourth positioning reference signal. For details, reference may be made to the descriptions of the activation information of the second positioning reference signal, the request information for the third positioning reference signal, and the first indication information of the fourth positioning reference signal, and details are not described herein again.

In the foregoing possible implementations, optionally, the receiving, by the terminal, second information may include at least one of the following:

(1) The terminal receives second information that is sent by the core network device using LPP signaling. A specific sending mode is similar to that for sending the first information by the terminal using LPP signaling, except that the second information is sent by the network-side device using a downlink resource. For details about other related descriptions, reference may be made to the foregoing related descriptions.

(2) The terminal receives second information that is sent by the network-side device using RRC signaling. A specific sending mode is similar to that for sending the first information by the terminal using RRC signaling, except that the second information is sent by the network-side device using a downlink resource. For details about other related descriptions, reference may be made to the foregoing related descriptions.

(3) The terminal receives second information that is broadcast by the network-side device.

(4) The terminal receives second information that is sent by the network-side device using DCI. A specific sending mode is similar to that for sending the first information by the terminal using UCI, except that the second information is sent by the network-side device using a downlink resource. For details about other related descriptions, reference may be made to the foregoing related descriptions.

(5) The terminal receives second information sent by the network-side device using MAC CE signaling. A specific sending mode is similar to that for sending the first information by the terminal using MAC CE, except that the second information is sent by the network-side device using a downlink resource. For details about other related descriptions, reference may be made to the foregoing related descriptions.

In the foregoing possible implementations, optionally, the first information and the second information may have at least one of the following characteristics:

(1) The first positioning reference signal does not belong to the fifth positioning reference signal. That is, the first positioning reference signal configured by the terminal does not belong to the fifth positioning reference signal configured by the network-side device or the core network device.

(2) The first positioning reference signal is a subset of the fifth positioning reference signal. That is, the first positioning reference signal configured by the terminal is part or all of the fifth positioning reference signals configured by the network-side device or the core network device.

(3) In a case that the configuration information of the first positioning reference signal is the same as the configuration information of the fifth positioning reference signal, the first information includes no configuration information of the first positioning reference signal, or includes only an ID of the first positioning reference signal or only indication information of the first positioning reference signal. In this manner, complete configuration information of a positioning reference signal may be pre-configured (using LPP or through broadcast) for UE by the network device (by a serving gNB or LMF). During transmission of the first information, the UE may perform indication in an uplink resource using fewer bits, so as to reduce uplink resources.

(4) The configuration information of the first positioning reference signal is different from the configuration information of the fifth positioning reference signal.

(5) The terminal expects the configuration information corresponding to the fifth positioning reference signal or the first positioning reference signal to be changed to the configuration information of the first positioning reference signal in the first information. That is, in a possible implementation, the network side configures the ID information and the configuration information of the fifth positioning reference signal, a positioning reference signal expected by the UE is different from the fifth positioning reference signal, and then the UE sends the configuration information of the first positioning reference signal.

(6) The second positioning reference signal does not belong to the fifth positioning reference signal or the sixth positioning reference signal.

(7) The second positioning reference signal is a subset of the fifth positioning reference signal or sixth positioning reference signal.

(8) In a case that the activation information of the second positioning reference signal is the same as the activation information of the sixth positioning reference signal, the first information includes no activation information of the second positioning reference signal, or sends only indication information (for example, activation state information) of the second positioning reference signal or ID information of the second positioning reference signal, so as to reduce uplink resources.

(9) The activation information of the second positioning reference signal is different from the activation information of the sixth positioning reference signal. Optionally, the ID information of the second positioning reference signal is different from the ID information of the sixth positioning reference signal, and the sent ID information of the sixth positioning reference signal is used to activate the sixth positioning reference signal; or the activation time information of the second positioning reference signal is different from the activation time information of the sixth positioning reference signal, and the sent activation time information of the sixth positioning reference signal is used to activate the sixth positioning reference signal.

(10) The terminal expects the activation information corresponding to the sixth positioning reference signal or the second positioning reference signal to be changed to activation information of the second positioning reference signal in the first information.

(11) The third positioning reference signal does not belong to the seventh positioning reference signal.

(12) The third positioning reference signal is a subset of the seventh positioning reference signal or fifth positioning reference signal.

(13) In a case that the request information for the third positioning reference signal is the same as the request information for the seventh positioning reference signal, the first information includes no request information for the third positioning reference signal.

(14) The request information for the third positioning reference signal is different from the request information for the seventh positioning reference signal.

(15) The terminal expects the request information for the seventh positioning reference signal to be changed to request information for the first positioning reference signal in the first information.

(16) The terminal expects to receive the third positioning reference signal according to the request information for the third positioning reference signal.

(17) The terminal expects to receive the second positioning reference signal according to the activation information of the second positioning reference signal.

(18) The terminal expects to receive the first positioning reference signal according to the configuration information of the first positioning reference signal.

In another possible implementation, after the terminal sends the first information, the method further includes: receiving, by the terminal, third information, where the third information includes at least one of the following:

(1) the second information, where, in this possible implementation, after the terminal sends the first information, the terminal receives the second information, that is, after S210, the terminal performs S212;

(2) activation failure indication information, where the indication information indicates that the first information (for example, the activation information of the second positioning reference signal and/or the request information for the third positioning reference signal) sent by the terminal fails to activate the positioning reference signal;

(3) retransmission request information, where the retransmission request information indicates the terminal to retransmit the first information; for example, the network-side device may send the retransmission request information in a case that the first information fails to be received; and after receiving such information, the terminal retransmits the first information last transmitted;

(4) an activated second positioning reference signal, where, for example, if the second positioning reference signal is activated successfully using the first information, the network-side device sends the second positioning reference signal at a transmission time indicated by the activation information of the second positioning reference signal, and the terminal receives the second positioning reference signal;

(5) a requested third positioning reference signal, where if the third positioning reference signal is requested successfully using the first information, the network-side device sends the third positioning reference signal, and the terminal receives the third positioning reference signal;

(6) reconfiguration information of the first positioning reference signal, where for example, the first information carries the configuration information of the first positioning reference signal expected by the terminal, and after receiving such information, the network-side device may send the reconfiguration information of the first positioning reference signal to the terminal according to expectation of the terminal;

(7) reporting request information for a twelfth positioning reference signal, where if the second positioning reference signal is activated successfully using the first information, the network-side device may request the terminal to report measurement information of the twelfth positioning reference signal, where the twelfth positioning reference signal is a subset of the second positioning reference signal; or if the sixth positioning reference signal is activated successfully using the second information, the network-side device may request the terminal to report the measurement information of the twelfth positioning reference signal, where the twelfth positioning reference signal is a subset of the sixth positioning reference signal;

(8) reporting resource information of the twelfth positioning reference signal;

(9) measurement request information sent by the network-side device or the core network device, where the measurement request information may be used to request the terminal to perform measurement on a specified positioning reference signal;

(10) HARQ feedback information, where the feedback information may be a feedback made by the network-side device for the first information sent by the terminal; and

(11) HARQ scheduling information; where the scheduling information indicates the terminal to feed back a time-frequency resource for the second information.

In the foregoing possible implementations, optionally, the first information and the second information may have at least one of the following characteristics:

(1) The fifth positioning reference signal does not belong to the first positioning reference signal.

(2) The fifth positioning reference signal is a subset of the first positioning reference signal.

(3) In a case that the second information excludes the configuration information corresponding to the fifth positioning reference signal, or includes only an ID of the fifth positioning reference signal or includes only indication information of the fifth positioning reference signal, the second information indicates the configuration information of the fifth positioning reference signal and the configuration information of the first positioning reference signal.

(4) The configuration information of the fifth positioning reference signal is different from the configuration information of the first positioning reference signal.

(6) The fifth positioning reference signal does not belong to the first positioning reference signal or the second positioning reference signal.

(7) The terminal receives a fifth positioning reference signal and/or a first positioning reference signal according to the configuration information of the fifth positioning reference signal, or receives a fifth positioning reference signal and/or a first positioning reference signal according to the configuration information of the fifth positioning reference signal and the configuration information corresponding to the first positioning reference signal.

(8) The fifth positioning reference signal is a subset of the first positioning reference signal or second positioning reference signal.

(9) In a case that the second information excludes the activation information corresponding to the sixth positioning reference signal, or includes only an ID of the sixth positioning reference signal or includes only indication information of the sixth positioning reference signal, the second information indicates that the activation information of the sixth positioning reference signal is the same as the activation information of the second positioning reference signal.

(10) The activation information of the sixth positioning reference signal is different from the activation information of the second positioning reference signal.

(11) The terminal receives a sixth positioning reference signal and/or a second positioning reference signal according to the activation information of the sixth positioning reference signal, or receives a sixth positioning reference signal and/or a second positioning reference signal according to the activation information of the sixth positioning reference signal and the activation information of the second positioning reference signal.

(12) The third positioning reference signal is a subset of the fifth positioning reference signal.

(13) The terminal expects to receive the third positioning reference signal according to the request information for the third positioning reference signal.

(14) The terminal expects to receive the second positioning reference signal according to the activation information of the second positioning reference signal.

(15) The terminal expects to receive the first positioning reference signal according to the configuration information of the first positioning reference signal.

In the foregoing possible implementations, the second information or the third information may be transmitted using downlink signaling, and the downlink signaling includes one of the following: DCI, MAC CE, RRC signaling, and LPP signaling.

In a possible implementation, the downlink signaling may include at least one of the following:

(1) a fifth bit string, where each bit in the fifth bit string or each ninth bit string in the fifth bit string is used to indicate an active sixth positioning reference signal, a length of the fifth bit string is N1 times a length of the ninth bit string, and N1 is a common divisor of the number of sixth positioning reference signals to be activated or a common divisor of the number of groups of sixth positioning reference signals to be activated;

(2) second indication information, where the second indication information indicates that the activation information of the sixth positioning reference signal is for activating the sixth positioning reference signal, or the second indication information indicates that the activation information of the sixth positioning reference signal is for deactivating the sixth positioning reference signal;

(3) a sixth bit string, for indicating an activated fifth target MG;

(4) a seventh bit string, for indicating activating or switching to the fifth target BWP;

(5) an eighth bit string, for indicating an activated fifth target configuration window; and

(6) third indication information, where the third indication information is ID information of the fifth positioning reference signal and the sixth positioning reference signal; optionally, the ID information includes at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, and BWP ID information.

In the foregoing possible implementations, optionally, one or more pieces of the downlink signaling are used to activate a plurality of target objects; optionally, the target object includes at least two of the sixth positioning reference signal, a fifth target BWP, a fifth target MG, and a fifth target configuration window.

Optionally, a mapping relationship is present between the target objects, and the mapping relationship may be: period being the same or a multiple relationship being present, or the second positioning reference signal or the third positioning reference signal being located in a target configuration window, or the activation times being the same, or activated time windows having an intersection or overlapping, or the like.

In the foregoing possible implementations, optionally, different types of sixth positioning reference signals are activated using different downlink signaling. For example, DCIs for activating different types of sixth positioning reference signals are different, or DCI for activating a same type of sixth positioning reference signals is different from DCI for deactivating such type of sixth positioning reference signals. Further, for example, during activation, a HARQ process ID of the DCI is 0, and/or a redundancy version is 0; during deactivation, the HARQ process ID and/or the redundancy version of the DCI are other values, or bit values of other DCI fields are introduced for restriction. It should be noted that the values of the HARQ process ID and the redundancy version are for illustration only, and the other values also fall within the protection range. Different types of sixth positioning reference signals include a periodic positioning reference signal, a semi-persistent positioning reference signal, an aperiodic positioning reference signal, or an on-demand positioning reference signal

Optionally, the terminal may indicate to the network-side device that the terminal does not expect to receive, in one slot, downlink signaling for activating same-type sixth positioning reference signals.

In a possible implementation, optionally, the downlink signaling includes uplink resource information used for reporting measurement information.

Optionally, the downlink signaling indicates the uplink resource information in at least one of the following manners:

(1) using a positioning reference signal request information field to indicate the uplink resource information, where the positioning reference signal request information field is used to activate the sixth positioning reference signal, for example, a PRS-request field in the DCI;

(2) using a resource request field and a positioning request information field to indicate the uplink resource information;

(3) using a pre-configured resource indication or a pre-configured resource ID to indicate the uplink resource information;

(4) using a buffer resource request to indicate the uplink resource information;

(5) using the activation information of the sixth positioning reference signal to indicate the uplink resource information; and

(6) using positioning reference signal reporting resource request information to indicate the uplink resource information.

In a possible implementation, optionally, the downlink signaling may further include at least one of the following:

(1) ID information of the twelfth positioning reference signal, for indicating reporting measurement information of the twelfth positioning reference signal; and

(2) configuration information or activation information, where, optionally, the configuration information of the uplink resource may include at least one of the following: a resource size, a target time of the resource, and a target period of the resource, and activation information of the reporting resource may include at least one of the following: a priority of the resource, a resource ID, a resource size, a target time of the resource, and a target period of the resource.

Optionally, a time of a time-domain resource of the uplink resource is not earlier than a transmission time of the activated sixth positioning reference signal, or is not earlier than a transmission time of the sixth positioning reference signal and a processing time of the sixth positioning reference signal, or is not earlier than an end time of the fifth target configuration window.

Optionally, the time-domain resource of the uplink resource is determined based on a transmission time of the downlink signaling and time information indicated by a predetermined field in the downlink signaling, or the time-domain resource of the uplink resource is determined based on the 1st or last sixth positioning reference signal and time information indicated by a predetermined field in the downlink signaling.

For example, the time-domain resource of the reporting resource is determined based on a transmission time of DCI and target time-domain offset information indicated by a predetermined field in the DCI, for example, being a sum of the transmission time of the DCI and the target time-domain offset information; or, the time-domain resource of the reporting resource is determined based on the 1st or last sixth positioning reference signal and second time-domain offset information indicated by a predetermined field in the DCI, or is determined based on the transmission time of the DCI and a target time-domain offset indicated by a predetermined field in the DCI. For example, the time-domain resource of the PUSCH may be a sum of the time of the DCI and the time indicated by the predetermined field (Time-domain resource assignment) in the DCI, or may be a sum of the 1st PRS or the last PRS activated and the time indicated by the predetermined field in the DCI.

In a possible implementation, after the terminal transmits the request information for the third positioning reference signal, the method further includes:

in a case that downlink signaling carrying the second information is not detected in a plurality of consecutive slots, or detected downlink signaling carrying the second information does not meet requirements of the terminal, sending, by the terminal, the request information for the third positioning reference signal again.

In a possible implementation, after the terminal sends the activation information of the second positioning reference signal, the method further includes:

in a case that the second positioning reference signal is not detected in a plurality of consecutive slots, or the detected second positioning reference signal does not meet requirements of the terminal, sending, by the terminal, the activation information of the second positioning reference signal again.

In a possible implementation, the sixth positioning reference signals activated by the activation information of the sixth positioning reference signal have a same BWP and/or a same frequency layer.

In a possible implementation, the method may further include:

in a case that the sixth positioning reference signals activated by the activation information of the sixth positioning reference signal have different BWPs and/or different frequency layers, the terminal performs one of the following:

requesting a target measurement gap and/or configuring a target measurement gap;
performing measurement only on a second positioning reference signal on an active BWP; and
requesting reconfiguration of a BWP.

In a possible implementation, after the terminal sends the first information, the method further includes at least one of the following:

the terminal receives or measures the second positioning reference signal;
the terminal receives or measures the third positioning reference signal; and
the terminal receives or measures the first positioning reference signal.

In this embodiment, optionally, the first indication information of the fourth positioning reference signal and the eighth positioning reference signal may include at least one of the following:

(1) power control information, where the power control information may include path loss signal information;
(2) BWP switching information, which may include: BWP indication information, or BWP request information dedicated for positioning (positioning); where
optionally, the terminal may use a BWP indication to indicate the network-side device to send a transmission-required bandwidth, and the network-side device may modify a BWP configuration for the terminal according to the BWP indication and activate BWP switching; and optionally, the BWP configuration may be modified using DCI or MAC CE;
(3) collision indication information, where the collision indication information may include priority indication information; and
(4) multiplexing information, which may include at least one of the following: type of a multiplexed signal, indication information of the multiplexed signal, and identification information of the multiplexed signal; where optionally, the multiplexing information may be included in UCI, MAC CE, RRC, or LPP.

In this embodiment of this application, optionally, the positioning reference signal may have at least one of the following characteristics:

1. if the positioning reference signal is an aperiodic positioning reference signal, the type of positioning reference signal reporting can only be aperiodic;
2. if the positioning reference signal is a semi-persistent positioning reference signal, the type of positioning reference signal reporting is semi-persistent or aperiodic;
3. if the positioning reference signal is an on-demand positioning reference signal, the type of positioning reference signal reporting is semi-persistent, aperiodic, or on-demand; and
4. positioning reference signals that have same activation state information or that can be activated by one DCI command have a same time-domain type (for example, periodic, aperiodic, semi-persistent, or on-demand).

In this embodiment of this application, optionally, if a bandwidth in a positioning reference signal configuration sent by the network-side device is greater than a BWP, the UE may perform one of the following actions:

performing measurement only on a first positioning reference signal within the BWP;
performing measurement only on a first positioning reference signal within the MG window; and
performing BWP reconfiguration/switching.

Optionally, activation of the positioning reference signal, and/or BWP switching or frequency-layer switching may have one of the following characteristics:

performing activation of the positioning reference signal and BWP/frequency layer switching based on one piece of DCI;
performing deactivation of the positioning reference signal based on one piece of DCI, where during deactivation, it may be implicitly indicated that the BWP is switched to a default BWP or an active BWP, or BWP switching may be explicitly indicated;
performing activation of the positioning reference signal and activation of a BWP for positioning based on one piece of DCI, where in this case, two active BWPs may be simultaneously present in one cell, and the UE may perform processing based on priorities determined according to the protocol or a network side indication or perform simultaneous processing;

performing activation of the positioning reference signal and BWP switching based on different DCIs, where the DCI for performing BWP switching needs to be not later than a positioning reference signal for activation of the positioning reference signal; and no BWP switching command is allowed between activation of the positioning reference signal and measurement of the 1st positioning reference signal, or the UE skips processing the BWP switching command;

if no MG is configured, the UE does not expect to process the positioning reference signal beyond the active BWP;

the UE does not expect to receive, in one slot, a plurality of pieces of signaling that includes a PRS-request;

having a same BWP/frequency layer for one trigger state (activation state) activated by a PRS-request or having a same BWP/frequency layer for one positioning reference signal resource set; or having a same BWP/frequency layer for one positioning reference signal reporting set; and

if BWPs/frequency layers for positioning reference signals of one trigger state that are activated by the PRS-request are different, the UE possibly performs one of the following actions: requesting an MG or configuring an MG, where, optionally, measurement on different BWPs or frequency layers is supported under the MG; performing measurement only on positioning reference signals on an active BWP; and requesting reconfiguration.

In a possible implementation, the PRS-request may be used to activate a plurality of UEs to perform measurement on a positioning reference signal, and UE that requires the measurement performs blind detection for DCI with a specific RNTI. If no DCI carrying the PRS-request is detected by the UE in N consecutive slots after transmission of the request information for the third positioning reference signal, or a current positioning reference signal activated by a PRS-request carried does not meet requirements of the UE, the UE initiates new activation and requesting of positioning reference signals.

In a possible implementation, before the first information is sent, the method may further include: the terminal reports capability information, where the capability information includes at least one of the following:

(1) a positioning reference signal type supported by the terminal, for example, an aperiodic, semi-persistent, or on-demand PRS, an aperiodic, semi-persistent, or on-demand SRS, or a combination of aperiodic/semi-persistent/on-demand PRS&SRS;

(2) a reporting type supported by the terminal, for example, measurement reporting for an aperiodic, semi-persistent, or on-demand PRS, an aperiodic, semi-persistent, or on-demand SRS, or a combination of aperiodic/semi-persistent/on-demand PRS&SRS;

(3) an activation type supported by the terminal, for example, PRS and SRS being activated simultaneously, PRS being activated, SRS being activated, or PRS&SRS being activated;

(4) a reporting activation type supported by the terminal, for example, PRS and SRS being reported simultaneously, PRS being reported, or PRS&SRS being reported;

(5) whether the terminal supports control performed via physical layer, RRC, or MAC;

(6) whether the terminal supports configuration performed via physical layer, RRC, or MAC; and

(7) whether the terminal supports activation or deactivation performed via physical layer, RRC, or MAC.

For ease of understanding, the following describes the DCI used in this embodiment of this application.

In this embodiment of this application, the DCI may be DCI of a predetermined format, for example, DCI 0_0, DCI 0_1, DCI 0_2, or may be a DCI format independently set for positioning.

Optionally, the DCI may be scrambled by a specific RNTI; the DCI may be information sent to one or a group of terminals or broadcast information; and the specific RNTI may be used to distinguish whether the activated positioning reference signal is a semi-persistent, aperiodic, or on-demand PRS.

Optionally, the DCI may include PRS-request information for indicating a specific PRS to be activated. The PRS-Request may include N1, N2, N3, N4... bits (bit), where the number of bits may be specified by an RRC message or directly determined based on the number of states in the activation state information (trigger state), or be a fixed bit quantity. According to a rule, a bit value of the PRS-request indicated in one piece of DCI correspondingly activates a PRS of a specific activation state or activates a specific PRS.

Optionally, the DCI may include MG-config information for indicating an ID or pattern (pattern) of a currently activated MG. The MG-config may further include a slot (slot offset) of the MG and indicate whether to support PRS measurement in a non-MG case.

Optionally, the DCI includes indication information that indicates switching to a BWP for positioning, or configuration information that indicates switching to a BWP for positioning.

Optionally, the DCI includes uplink resource information for reporting the measurement information, and the uplink resource information includes transmission time information of PUSCH.

Alternatively, if the UE is semi-persistent, other DCI fields may be used for activation or deactivation.

In this embodiment of this application, timing for sending the PRS may be implemented in the following two manners:

Implementation 1:

Transmission time of an aperiodic PRS is: slot (slot) n+X.

Transmission time of a predetermined-type PRS is = slot n+X+P (period), where the predetermined type includes a semi-persistent PRS, and a semi-persistent or periodic on-demand PRS.

Slot n is an activation time of the PRS, and X is time-domain information of the PUSCH, that is, a slot offset (slot offset) relative to the activation time; where X may be configured in PRS configuration information, for example, being configured based on one or more of the following: per positioning reference signal resource, per positioning reference signal resource set, per TRP, and per positioning reference signal group, or may be indicated by downlink signaling (for example, MAC CE or DCI).

Implementation 2:

Transmission time of aperiodic

$$\text{PRS} \;=\; \left\lfloor n \cdot \frac{2^{\mu_{PRS}}}{2^{\mu_{PDCCH}}} \right\rfloor + X + \left\lfloor \left( \frac{N^{CA}_{slot,offset,PDCCH}}{2^{\mu_{offset,PDCCH}}} - \frac{N^{CA}_{slot,offset,PRS}}{2^{\mu_{offset,PRS}}} \right) \cdot 2^{\mu_{PRS}} \right\rfloor.$$

Transmission time of a predetermined-type PRS is:

$$\left\lfloor n \cdot \frac{2^{\mu_{PRS}}}{2^{\mu_{PDCCH}}} \right\rfloor + X + P + \left\lfloor \left( \frac{N^{CA}_{slot,offset,PDCCH}}{2^{\mu_{offset,PDCCH}}} - \frac{N^{CA}_{slot,offset,PRS}}{2^{\mu_{offset,PRS}}} \right) \cdot 2^{\mu_{PRS}} \right\rfloor.$$

n is an activation time of the PRS, P is a period of the PRS, $\mu_{PRS}$ is numerology for the PRS, $\mu_{PDCCH}$ is numerology for the PDCCH, $N^{CA}_{slot,offset,PDCCH}$ is a slot offset for the PDCCH on a carrier, $\mu_{offset,PDCCH}$ is a numerology offset for the PDCCH on different carriers, $N^{CA}_{slot,offset,PRS}$ is a slot offset of the PRS on a carrier, and $\mu_{offset,PRS}$ is a numerology offset for the PRS on different carriers.

In this implementation, $\mu$ (numerology), cross-carrier scheduling, and the like are considered.

Similarly, there are two implementations for timing of PRS reporting.

Implementation 1:

Transmission time of an aperiodic PRS is: slot n+Y.

Transmission time of a predetermined-type PRS is = slot n+Y+P (period).

Y is a slot offset relative to the activation time. The slot offset may be configured in PRS configuration information, for example, being configured based on one or more of the following: per positioning reference signal resource, per positioning reference signal resource set, per TRP, and per positioning reference signal group, or may be provided in MAC CE or DCI.

Implementation 2:

Transmission time of an aperiodic PRS is:

$$\left\lfloor n \cdot \frac{2^{\mu_{PRS}}}{2^{\mu_{PDCCH}}} \right\rfloor + Y + \left\lfloor \left( \frac{N^{CA}_{slot,offset,PDCCH}}{2^{\mu_{offset,PDCCH}}} - \frac{N^{CA}_{slot,offset,PRS}}{2^{\mu_{offset,PRS}}} \right) \cdot 2^{\mu_{PRS}} \right\rfloor.$$

Transmission time of a predetermined-type PRS is:

$$\left\lfloor n \cdot \frac{2^{\mu_{PRS}}}{2^{\mu_{PDCCH}}} \right\rfloor + Y + P + \left\lfloor \left( \frac{N_{slot,offset,PDCCH}^{CA}}{2^{\mu_{offset,PDCCH}}} - \frac{N_{slot,offset,PRS}^{CA}}{2^{\mu_{offset,PRS}}} \right) \cdot 2^{\mu_{PRS}} \right\rfloor .$$

In the foregoing possible implementations, the activation time of the positioning reference signal may be a time of the DCI for activating the first positioning reference signal or a transmission time of feedback information HARQ for PDSCH (for example, MAC CE, RRC, or LPP including the activation information of the PRS).

In this embodiment of this application, the MAC CE may use the following type:

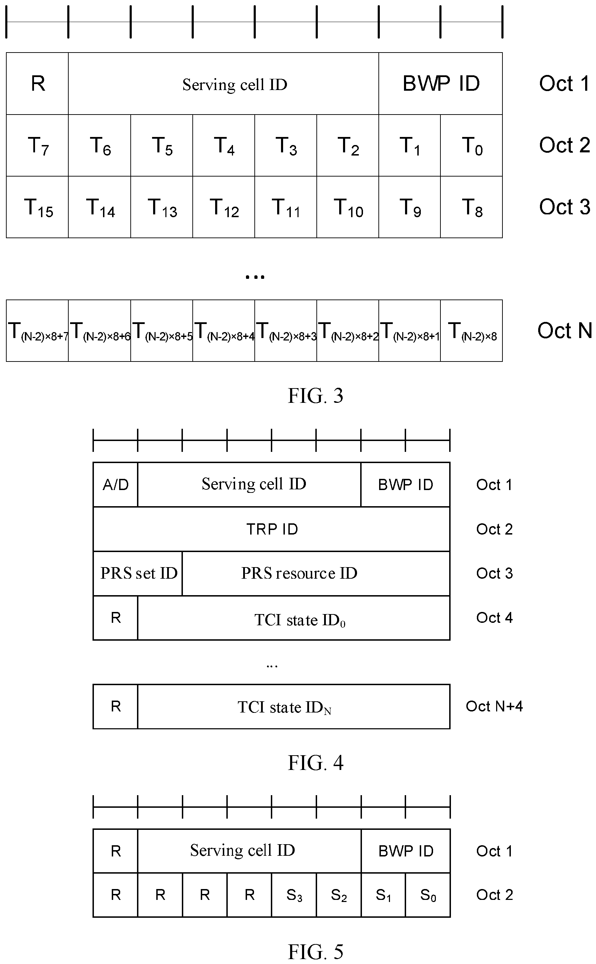

(1) containing activation state information or corresponding information of a PRS or a PRS group, where the structure is shown in FIG. 3;
(2) containing PRS identification information and TCI information, where the structure is shown in FIG. 4; and
(3) using type selection for PUCCH reporting, where the structure is shown in FIG. 5.

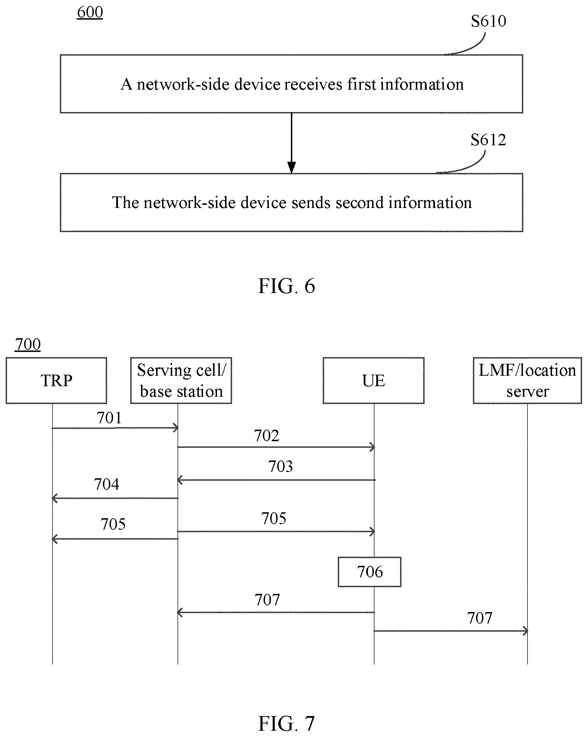

FIG. 6 is a schematic flowchart of a positioning method according to an embodiment of this application. The method 600 may be executed by a network-side device. In other words, the method may be performed by software or hardware installed on the network-side device. As shown in FIG. 6, the method may include at least one of the following steps: S610 or S612.

It should be noted that, although S612 is executed after S610 in the process shown in FIG. 6, this is not limited thereto, and S612 may alternatively be executed before S610 in this embodiment of this application.

S610: The network-side device receives first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part BWP switching information, collision indication information, and multiplexing information.

S610 corresponds to S210 in the method 200, and the first information is the same as the first information in the method 200. For details, reference may be made to the description in the method 200, and details are not described herein again.

S612: The network-side device sends second information; where the second information includes at least one of the following: configuration information of a fifth positioning reference signal, activation information of a sixth positioning reference signal, request information for a seventh positioning reference signal, and the first indication information of an eighth positioning reference signal.

S612 corresponds to S212 in the method 200, and the second information is the same as the second information in the method 200. For details, reference may be made to the description in the method 200, and details are not described herein again.

In a possible implementation, the configuration information of the first positioning reference signal includes at least one of the following:

ID information of the first positioning reference signal, where the ID information includes at least one of the following: frequency layer indicator information, Transmission and reception point TRP ID information, resource set or resource ID information, TRP group ID information, positioning reference signal group ID information, positioning reference signal resource group ID information, positioning reference signal resource set ID information, positioning reference signal reporting set ID information, measurement gap MG ID information, and bandwidth part BWP ID information; configuration information corresponding to the ID information, where the corresponding configuration information includes at least one of the following: period, muting parameter, number of repetitions, offset within a period, bandwidth information, frequency-domain offset information, time information, spatial direction indication information, transmission configuration indicator TCI indication information, quasi co-location QCL indication information, beam indication information, power information, MG configuration information, type of positioning reference signal, BWP information, transmission, stop of transmission, activation/deactivation flag, numerology (numerology), and time offset information;
positioning method indication information;
precision requirement information;
first configuration window;
discontinuous reception DRX configuration information;
positioning reference signal reporting set ID;
indication information of whether to be multiplexed with other signals;
configuration information of a multiplexed signal; and
priority indication information of the first positioning reference signal.

In a possible implementation, the activation information of the second positioning reference signal includes at least one of the following:

ID information of the second positioning reference signal;
activation time information;
configuration information of the second positioning reference signal;
type information of the second positioning reference signal;
configuration information of a first target MG;
configuration information of a first target BWP;
reporting information of a ninth positioning reference signal, where the ninth positioning reference signal is a subset of the second positioning reference signal; and
first target configuration window information, where the first target configuration window information includes at least one of the following: first target search window information, first target measurement window information, first target MG information, and first target reporting window information of the second positioning reference signal.

In a possible implementation, the request information for the third positioning reference signal is used for at least one of the following:

requesting configuration information of the third positioning reference signal; and
requesting activation information of the third positioning reference signal.

In a possible implementation, the request information for the third positioning reference signal includes at least one of the following:

ID information of the third positioning reference signal, where the ID information includes at least one of the following: frequency layer indicator information, TRP ID information, resource set or resource ID information, TRP group ID information, positioning reference signal group ID information, positioning reference signal resource group ID information, positioning reference signal resource set ID information, positioning reference signal reporting set ID information, MG ID information, and BWP ID information;
configuration information corresponding to the ID information, where the corresponding configuration information includes at least one of the following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, BWP information, transmission, stop of transmission, and activation/deactivation flag;
terminal-expected configuration information, where the expected configuration information includes at least one of the following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, and BWP information;
positioning requirement information, where the positioning requirement information includes at least one of the following: positioning precision, positioning delay, positioning power, positioning method, and positioning reliability;
configuration validation time information or configuration time information;
a request for time information;
a request for configuration information of a second target configuration window, where the configuration information of the second target configuration window includes at least one of the following: configuration information of a second target search window, configuration information of a second target measurement window, configuration information of a second target MG, and configuration information of a second target reporting window of the third positioning reference signal; and
configuration information of a second target BWP.

In a possible implementation, the activation information of the second positioning reference signal or the request information for the third positioning reference signal is used to request, activate, or deactivate at least one of the following: transmission of the second positioning reference signal, activation of the second positioning reference signal, configuration of the second positioning reference signal, measurement of the second positioning reference signal, configuration of the first positioning reference signal, transmission of the first positioning reference signal, activation of the first positioning reference signal, configuration of the third positioning reference signal, transmission of the third positioning reference signal, activation of the third positioning reference signal, and measurement of the third positioning reference signal.

In a possible implementation, before the network-side device receives the first information, the method further includes:

sending, by the network-side device, the second information.

In a possible implementation, optionally, the first information and the second information have at least one of the following characteristics:

that the first positioning reference signal does not belong to the fifth positioning reference signal;

that the first positioning reference signal is a subset of the fifth positioning reference signal;

that in a case that the configuration information of the first positioning reference signal is the same as the configuration information of the fifth positioning reference signal, the first information includes no configuration information of the first positioning reference signal, or includes only an ID of the first positioning reference signal or only indication information of the first positioning reference signal;

that the configuration information of the first positioning reference signal is different from the configuration information of the fifth positioning reference signal;

that the terminal expects the configuration information corresponding to the fifth positioning reference signal or first positioning reference signal to be changed to configuration information of the first positioning reference signal in the first information;

that the second positioning reference signal does not belong to the fifth positioning reference signal or the sixth positioning reference signal;

that the second positioning reference signal is a subset of the fifth positioning reference signal or sixth positioning reference signal;

that in a case that the first information excludes the activation information corresponding to the second positioning reference signal, or includes only an ID of the second positioning reference signal or includes only indication information for the second positioning reference signal, it indicates that the activation information of the second positioning reference signal is the same as the activation information of the sixth positioning reference signal;

that the activation information of the second positioning reference signal is different from the activation information of the sixth positioning reference signal;

that the terminal expects the activation information corresponding to the sixth positioning reference signal or the second positioning reference signal to be changed to activation information of the second positioning reference signal in the first information;

that the third positioning reference signal does not belong to the seventh positioning reference signal;

that the third positioning reference signal is a subset of the seventh positioning reference signal or fifth positioning reference signal;

that in a case that the first information excludes the request information corresponding to the third positioning reference signal, or includes only an ID of the third positioning reference signal or includes only indication information for the third positioning reference signal, it indicates that the request information corresponding to the third positioning reference signal is the same as the request information for the seventh positioning reference signal;

that the request information for the third positioning reference signal is different from the request information for the seventh positioning reference signal;

that the terminal expects the request information for the seventh positioning reference signal to be changed to request information for the first positioning reference signal in the first information;

that the terminal expects to receive the third positioning reference signal according to the request information for the third positioning reference signal;

that the terminal expects to receive the second positioning reference signal according to the activation information of the second positioning reference signal; and

that the terminal expects to receive the first positioning reference signal according to the configuration information of the first positioning reference signal.

In a possible implementation, after the network-side device receives the first information, the method further includes: sending, by the network-side device, third information, where the third information includes at least one of the following:

the second information;

activation failure indication information;

retransmission request information;

an activated second positioning reference signal;

a requested third positioning reference signal;

reconfiguration information of the first positioning reference signal;
reporting request information for a twelfth positioning reference signal;
reporting resource information of the twelfth positioning reference signal;
measurement request information sent by the network-side device or the core network device;
HARQ feedback information; and
HARQ scheduling information.

In the foregoing possible implementations, optionally, the first information and the second information have at least one of the following characteristics:

that the fifth positioning reference signal does not belong to the first positioning reference signal;
that the fifth positioning reference signal is a subset of the first positioning reference signal;
that in a case that the configuration information of the fifth positioning reference signal and the configuration information of the first positioning reference signal, the second information excludes the configuration information corresponding to the fifth positioning reference signal, or includes only an ID of the fifth positioning reference signal or includes only indication information of the fifth positioning reference signal;
that the configuration information of the fifth positioning reference signal is different from the configuration information of the first positioning reference signal;
that the fifth positioning reference signal does not belong to the first positioning reference signal or the second positioning reference signal;
that the terminal is indicated to receive a fifth positioning reference signal and/or a first positioning reference signal according to the configuration information of the fifth positioning reference signal, or receive a fifth positioning reference signal and/or a first positioning reference signal according to the configuration information of the fifth positioning reference signal and the configuration information corresponding to the first positioning reference signal;
that the fifth positioning reference signal is a subset of the first positioning reference signal or second positioning reference signal;
that in a case that the activation information of the sixth positioning reference signal is the same as the activation information of the second positioning reference signal, the second information excludes the activation information of the sixth positioning reference signal, or includes only an ID of the sixth positioning reference signal or includes only indication information of the sixth positioning reference signal;
that the activation information of the sixth positioning reference signal is different from the activation information of the second positioning reference signal;
that the terminal is indicated to receive a sixth positioning reference signal and/or a second positioning reference signal according to the activation information of the sixth positioning reference signal, or receive a sixth positioning reference signal and/or a second positioning reference signal according to the activation information of the sixth positioning reference signal and the activation information of the second positioning reference signal;
that the third positioning reference signal is a subset of the fifth positioning reference signal;
that the terminal expects to receive the third positioning reference signal according to the request information for the third positioning reference signal;
that the terminal expects to receive the second positioning reference signal according to the activation information of the second positioning reference signal; and
that the terminal expects to receive the first positioning reference signal according to the configuration information of the first positioning reference signal.

In this embodiment of this application, the network-side device sends, to the terminal based on the first information and/or the second information, a positioning reference signal, for example, a second positioning reference signal and/or a sixth positioning reference signal.

FIG. 7 is another schematic flowchart of a positioning method according to an embodiment of this application. The method 700 may be executed by a terminal, a serving cell or a base station, and a TRP. As shown in FIG. 7, the method mainly includes the following steps:

S701: A serving cell or base station collects TRP information.
S702: The serving cell or the base station sends PRS configuration information to the terminal, or an LMF or a positioning server sends PRS configuration information to the terminal.

The configuration information may include the second information in the method 200 and the method 600, and may have possible implementations described in the method 200 and the method 600. For details, reference may be made to the related descriptions in the method 200 and the method 600, and details are not described herein again.

This step is an optional step.

S703: The terminal sends PRS activation or configuration request information to the serving cell or the base station.

The activation or configuration request information may include the first information in the method 200 and the method 600, and may have possible implementations described in the method 200 and the method 600. For details, reference may be made to the related descriptions in the method 200 and the method 600, and details are not described herein again.

S704: The serving cell or the base station sends PRS configuration information to the TRP when receiving, from the terminal, PRS activation request information.

After receiving the PRS activation request information from the terminal, the serving cell or the base station determines that the terminal has a positioning requirement, and therefore sends the PRS configuration information to the TRP, so that the TRP can learn about the PRS configuration information of the terminal.

This step is an optional step.

S705: The serving cell or the base station sends a PRS activation indication to the TRP and sends, to the terminal, activation information for activating PRS reconfiguration and/or measurement and/or reporting.

The serving cell or base station sends a PRS activation indication to the TRP, and the activated TRP sends a positioning reference signal to the terminal.

S706: The terminal performs measurement or location calculation based on the configuration information and the activation information.

This step is an optional step.

S707: The terminal reports measurement information and/or location information to the serving cell or the base station, or the terminal may report the measurement information and/or the location information to the location management function (Location Management Function, LMF) or the location server, and the LMF or the location server may perform location calculation after receiving the measurement information and/or the location information.

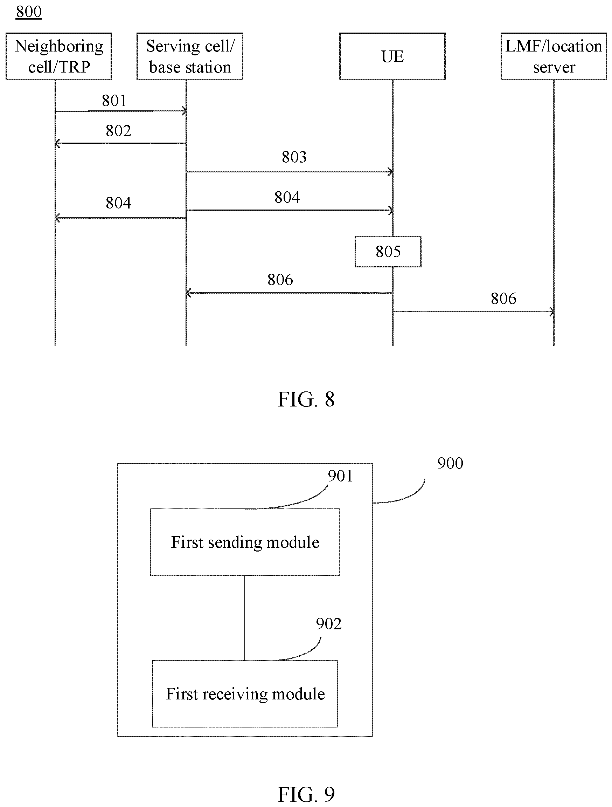

FIG. 8 is another schematic flowchart of a positioning method according to an embodiment of this application. The method 800 may be executed by a terminal, a serving cell or a base station, and a TRP. As shown in FIG. 8, the method mainly includes the following steps.

S801: A serving cell or base station collects TRP information.

S802: The serving cell or the base station sends PRS configuration information to the TRP.

S803: The serving cell or the base station sends the PRS configuration information to the terminal.

The configuration information may include the configuration information of the first positioning reference signal in the second information in the method 200 and the method 600 described above.

S804: The serving cell or the base station sends a PRS activation indication to the TRP and sends, to the terminal, activation information for activating PRS measurement and/or reporting.

The activation information may be the activation information of the second positioning reference signal in the second information in the method 200 and the method 600 described above.

S805: The terminal performs PRS measurement or reporting based on the received configuration information and activation information.

S806: The terminal reports measurement information and/or location information to the serving cell or the base station, or the terminal may report the measurement information and/or the location information to the location management function (Location Management Function, LMF) or the location server, and the LMF or the location server may perform location calculation after receiving the measurement information and/or the location information.

It should be noted that, for the positioning method provided in the embodiments of this application, the execution body may be a positioning apparatus, or a control module for executing the positioning method in the positioning apparatus. In the embodiments of this application, the positioning method provided in the embodiments of this application is described by using the positioning method being executed by the positioning apparatus as an example.

FIG. 9 is a schematic structural diagram of a positioning apparatus according to an embodiment of this application. As shown in FIG. 9, the apparatus mainly includes:

a first sending module 901, configured to send first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part BWP switching information, collision indication information, and multiplexing information; and

a first receiving module 902, configured to receive second information; where the second information includes at least one of the following: configuration information of a fifth positioning reference signal, activation information of a sixth positioning reference signal, request information for a seventh positioning reference signal, and the first indication information of an eighth positioning reference signal.

Optionally, the positioning apparatus may further include a first obtaining module configured to obtain the first information.

Optionally, the positioning apparatus may further include a monitoring module configured to monitor an activated positioning reference signal.

The positioning apparatus in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The positioning apparatus in this embodiment of this application may be an apparatus with an operating system. The operating system may be an Android (Android) operating system, an iOS operating system, or other possible operating systems, and is not specifically limited in the embodiments of this application.

The positioning apparatus provided in this embodiment of this application is capable of implementing the processes implemented by the terminal in the method embodiments in FIG. 2 to FIG. 8, with the same technical effects achieved. To avoid repetition, details are not described herein again.

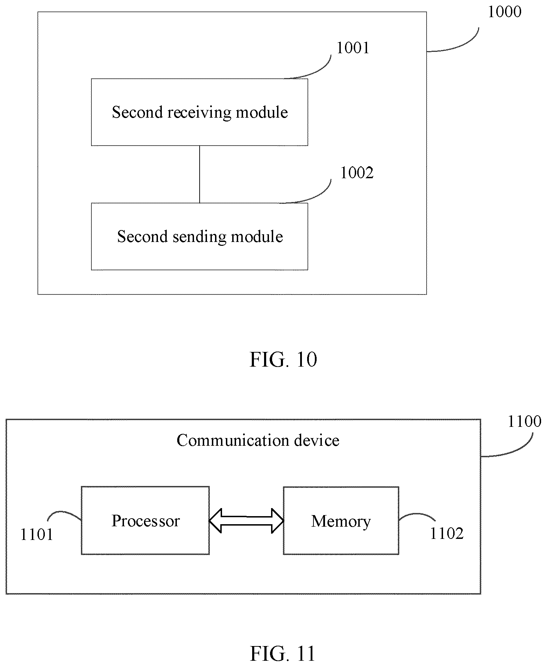

FIG. 10 is another schematic structural diagram of a positioning apparatus according to an embodiment of this application. As shown in FIG. 10, the positioning apparatus may include:

a second receiving module 1001, configured to receive first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part BWP switching information, collision indication information, and multiplexing information; and/or
a second sending module 1002, configured to send second information, where the second information includes at least one of the following: configuration information of a fifth positioning reference signal, activation information of a sixth positioning reference signal, request information for a seventh positioning reference signal, and the first indication information of an eighth positioning reference signal.

Optionally, the positioning apparatus may further include a third sending module configured to send the activated positioning reference signal.

Optionally, the positioning apparatus may further include a second obtaining module configured to obtain the second information.

The positioning apparatus provided in this embodiment of this application is capable of implementing the processes implemented by the network-side device in the method embodiments in FIG. 2 to FIG. 8, with the same technical effects achieved. To avoid repetition, details are not described herein again.

Optionally, as shown in FIG. 11, an embodiment of this application further provides a communication device 1100, including a processor 1101, a memory 1102, and a program or instructions stored in the memory 1102 and executable on the processor 1101. For example, when the communication device 1100 is a terminal and when the program or instructions are executed by the processor 1101, the processes of the foregoing embodiment of the positioning method are implemented, with the same technical effects achieved. When the communication device 1100 is a network-side device and when the program or instructions are executed by the processor 1101, the processes of the foregoing embodiment of the positioning method are implemented, with the same technical effects achieved. To avoid repetition, details are not described herein again.

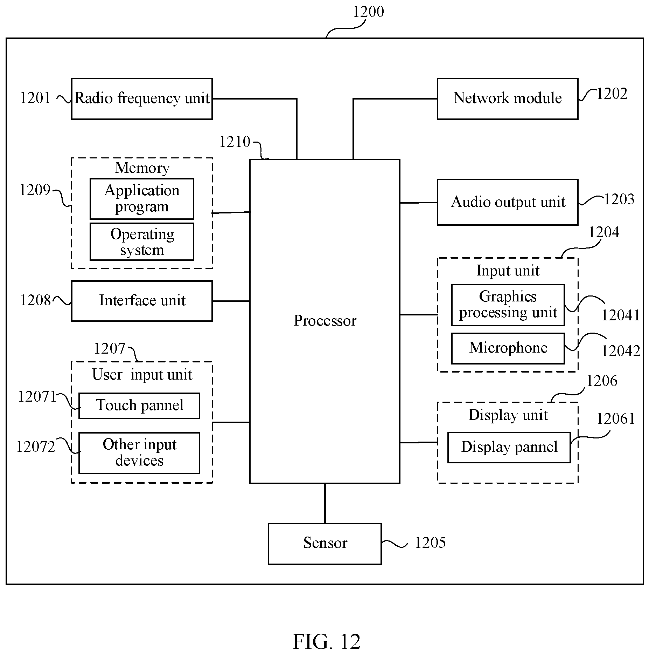

FIG. 12 is a schematic diagram of a hardware structure of a terminal for implementing the embodiments of this application.

The terminal 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the terminal 1200 may further include a power supply (for example, a battery) supplying power to the components, and the power supply may be logically connected to the processor 1210 through a power management system. In this way, functions such as charge management, discharge management, and power consumption management are implemented by using the power management system. The structure of the terminal shown in FIG. 12 does not constitute any limitation on the terminal. The terminal may include more or fewer components than those shown in the figure, or a combination of some components, or the components disposed differently. Details are not described herein again.

It can be understood that in this embodiment of this application, the input unit 1204 may include a graphics processing unit (Graphics Processing Unit, GPU) 12041 and a microphone 12042. The graphics processing unit 12041 processes image data of a still picture or video obtained by an image capture apparatus (such as a camera) in a video capture mode or an image capture mode. The display unit 1206 may include a display panel 12061, and the display panel 12061 may be configured in a form of a liquid crystal display, an organic light-emitting diode, and the like. The user input unit 1207 may include a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or a power on/off key), a trackball, a mouse, a joystick, and the like. Details are not described herein.

In this embodiment of this application, the radio frequency unit 1201 receives downlink data from a network-side device, and then sends the downlink data to the processor 1210 for processing; and also sends uplink data to the network-side device. Generally, the radio frequency unit 1201 includes but is not limited to an antenna, at least one amplifier, a transceiver, a coupler, a low noise amplifier, a duplexer, and the like.

The memory 1209 may be configured to store software programs or instructions and various data. The memory 1209 may include a program or instruction storage area and a data storage area. The program or instruction storage area may store an operating system, an application program or instruction required by at least one function (for example, a sound playback function or an image playback function), and the like. In addition, the memory 1209 may include a high-speed random access memory, and may further include a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one disk storage device, a flash memory device, or another non-volatile solid-state storage device.

The processor 1210 may include one or more processing units. Optionally, an application processor and a modem processor may be integrated in the processor 1210. The application processor primarily processes an operating system, user interfaces, application programs or instructions, and the like. The modem processor primarily processes radio communication, for example, being a baseband processor. It can be understood that the modem processor may alternatively be not integrated in the processor 1210.

The radio frequency unit 1201 is configured to send first information, where the first information includes at least one of the following: configuration information of a first positioning reference signal, activation information of a second positioning reference signal, request information for a third positioning reference signal, and first indication information of a fourth positioning reference signal, where the first indication information includes at least one of the following: power control information, bandwidth part BWP switching information, collision indication information, and multiplexing information; and/or

receive second information; where the second information includes at least one of the following: configuration information of a fifth positioning reference signal, activation information of a sixth positioning reference signal, request information for a seventh positioning reference signal, and the first indication information of an eighth positioning reference signal.

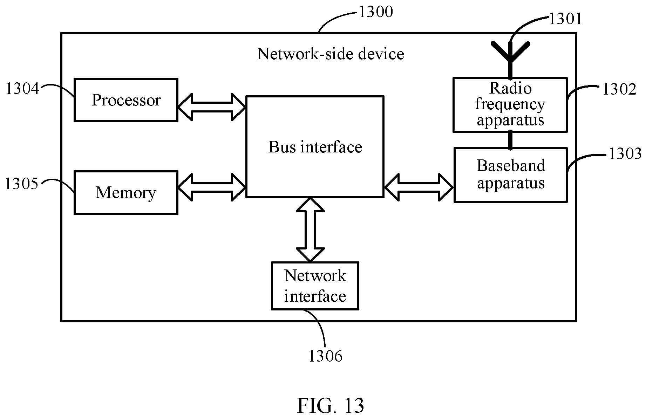

Specifically, an embodiment of this application further provides a network-side device. As shown in FIG. 13, the network device 1300 includes an antenna 1301, a radio frequency apparatus 1302, and a baseband apparatus 1303. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes to-be-sent information, and sends the information to the radio frequency apparatus 1302; and the radio frequency apparatus 1302 processes the received information and then sends the information out by using the antenna 1301.

The frequency band processing apparatus may be located in the baseband apparatus 1303. The method performed by the network-side device in the foregoing embodiments may be implemented in the baseband apparatus 1303, and the baseband apparatus 1303 includes a processor 1304 and a memory 1305.

The baseband apparatus 1303 may include, for example, at least one baseband board, where a plurality of chips are disposed on the baseband board. As shown in FIG. 13, one of the chips, for example, the processor 1304, is connected to the memory 1305, to invoke a program in the memory 1305 to perform the operation of the network device shown in the foregoing method embodiments.

The baseband apparatus 1303 may further include a network interface 1306, configured to exchange information with the radio frequency apparatus 1302, where the interface is, for example, a common public radio interface (common public radio interface, CPRI for short).

Specifically, the network-side device in this embodiment of the present invention further includes: instructions or a program stored in the memory 1305 and executable on the processor 1304. The processor 1304 invokes the instructions or program in the memory 1305 to execute the method executed by the modules shown in FIG. 10, with the same technical effects achieved. To avoid repetition, details are not repeated herein.

An embodiment of this application further provides a readable storage medium, where a program or instructions are stored in the readable storage medium. When the program or instructions are executed by a processor, the processes of the foregoing embodiment of the positioning method described above can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to execute a program or instructions of a network device to implement the processes of the foregoing positioning method embodiments, with the same technical effects achieved. To avoid repetition, details are not described herein again.

A computer program product is provided, where the computer program product includes a processor, a memory, and a program or instructions stored in the memory and executable on the processor, and when the program or instructions are executed by the processor, the processes of the positioning method embodiments described above are implemented.

It should be understood that the chip mentioned in the embodiments of this application may also be referred to as a system-level chip, a system chip, a chip system, a system-on-chip, or the like.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

**1.** A positioning method, comprising at least one of following:

sending, by a terminal, first information; wherein the first information comprises at least one of following: configuration information of a first positioning reference signal, activation information of a second positioning reference signal, request information for a third positioning reference signal, and first indication information of a fourth positioning reference signal, wherein the first indication information comprises at least one of following: power control information, bandwidth part BWP switching information, collision indication information, and multiplexing information; and

receiving, by the terminal, second information; wherein the second information comprises at least one of following: configuration information of a fifth positioning reference signal, activation information of a sixth positioning reference signal, request information for a seventh positioning reference signal, and the first indication information of an eighth positioning reference signal.

**2.** The method according to claim 1, wherein the configuration information of the first positioning reference signal comprises at least one of following:

identifier information of the first positioning reference signal, wherein the identifier information comprises at least one of following: frequency layer indicator information, transmission and reception point TRP identifier information, resource set or resource identifier information, TRP group identifier information, positioning reference signal group identifier information, positioning reference signal resource group identifier information, positioning reference signal resource set identifier information, positioning reference signal reporting set identifier information, measurement gap MG identifier information, and bandwidth part BWP identifier information;

configuration information corresponding to the identifier information, wherein corresponding configuration information comprises at least one of following: period, muting parameter, number of repetitions, offset within a period, bandwidth information, frequency-domain offset information, time information, spatial direction indication information, transmission configuration indicator TCI indication information, quasi co-location QCL indication information, beam indication information, power information, MG configuration information, type of positioning reference signal, BWP information, transmission, stop of transmission, activation/deactivation flag, numerology (numerology), and time offset information;

positioning method indication information;

precision requirement information;

configuration information of a first configuration window;

discontinuous reception DRX configuration information;

positioning reference signal reporting set identifier;

indication information of whether to be multiplexed with other signals;

configuration information of a multiplexed signal; and

priority indication information of the first positioning reference signal.

**3.** The method according to claim 2, wherein the configuration information of the first configuration window comprises at least one of following:

configuration information of the first positioning reference signal in relation to the first configuration window;

configuration information of a selected positioning reference signal in relation to the first configuration window;

start time information of the first configuration window;

window length information of the first configuration window; and

period information of the first configuration window; wherein

the first configuration window comprises at least one of following: a search window, a measurement window, a measurement gap MG, and a reporting window.

**4.** The method according to claim 2, wherein in a case that the first positioning reference signal is a semi-persistent positioning reference signal, an aperiodic positioning reference signal, or an on-demand positioning reference signal, the configuration information of the first positioning reference signal further comprises at least one of following:

one or more pieces of activation state information;

period and time offset information;

time-domain offset information; and

starting position information for sending the first positioning reference signal.

**5.** The method according to claim 4, wherein

one piece of activation state information is associated with one or more first positioning reference signals; or

one piece of activation state information is associated with one or more first unit resources, wherein the first unit resource comprises at least following: a positioning reference signal resource corresponding to one TRP, one positioning reference signal resource, one positioning reference signal resource set, one positioning reference signal resource group, and a positioning reference signal reporting set.

**6.** The method according to claim 1, wherein the activation information of the second positioning reference signal comprises at least one of following:

identifier information of the second positioning reference signal;

activation time information;

configuration information of the second positioning reference signal;
type information of the second positioning reference signal;
configuration information of a first target BWP;
reporting information of a ninth positioning reference signal, wherein the ninth positioning reference signal is a subset of the second positioning reference signal; and
first target configuration window information, wherein the first target configuration window information comprises at least one of following: first target search window information, first target measurement window information, first target MG information, and first target reporting window information of the second positioning reference signal.

7. The method according to claim 1, wherein the request information for the third positioning reference signal comprises at least one of following:

identifier information of the third positioning reference signal, wherein the identifier information comprises at least one of following: frequency layer indicator information, TRP identifier information, resource set or resource identifier information, TRP group identifier information, positioning reference signal group identifier information, positioning reference signal resource group identifier information, positioning reference signal resource set identifier information, positioning reference signal reporting set identifier information, MG identifier information, and BWP identifier information;
configuration information corresponding to the identifier information, wherein corresponding configuration information comprises at least one of following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, BWP information, transmission, stop of transmission, and activation/deactivation flag;
terminal-expected configuration information, wherein expected configuration information comprises at least one of following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, and BWP information;
positioning requirement information, wherein the positioning requirement information comprises at least one of following: positioning precision, positioning delay, positioning power, positioning method, and positioning reliability;
configuration validation time information or configuration time information;
a request for time information;
a request for configuration information of a second target configuration window, wherein the configuration information of the second target configuration window comprises at least one of following: configuration information of a second target search window, configuration information of a second target measurement window, configuration information of a second target MG, and configuration information of a second target reporting window of the third positioning reference signal; and
configuration information of a second target BWP.

8. The method according to claim 7, wherein the request information for the third positioning reference signal is used to request for configuration information of the third positioning reference signal; or the third positioning reference signal is the first positioning reference signal.

9. The method according to claim 1, wherein the request information for the third positioning reference signal comprises at least one of following:

identifier information of the third positioning reference signal;
activation time information;
configuration information of the third positioning reference signal;
type information of the third positioning reference signal;
positioning requirement information;
reporting information of a tenth positioning reference signal, wherein the tenth positioning reference signal is a subset of the third positioning reference signal;
third target configuration window information;
identifier information of the third positioning reference signal expected to be activated;

expected activation time information;

expected configuration information of the third positioning reference signal;

expected type information of the third positioning reference signal;

expected information about the third target configuration window, wherein configuration information of the third target configuration window comprises at least one of following: configuration information of a third target search window, configuration information of a third target measurement window, configuration information of a third target MG, and configuration information of a third target reporting window of the third positioning reference signal; and

a third target BWP.

10. The method according to claim 9, wherein

the request information for the third positioning reference signal is used to request activation information of the third positioning reference signal; or

the third positioning reference signal is the second positioning reference signal.

11. The method according to claim 6 or 9, wherein the first target configuration window information or the third target configuration window is used for activating or requesting a corresponding first configuration window; or/and the first target configuration window information or the third target configuration window is used for requesting or activating a corresponding first configuration window and a positioning reference signal configured in the first configuration window.

12. The method according to claim 9, wherein in a case that the activation information of the second positioning reference signal or the request information for the third positioning reference signal comprises at least two of following:

identifier information corresponding to the second positioning reference signal or the third positioning reference signal;

target BWP; and

configuration information of a target configuration window;

a mapping relationship is present between the at least two.

13. The method according to any one of claims 2 to 12, wherein the second positioning reference signal or/and the third positioning reference signal comprises one of following: an aperiodic positioning reference signal, a semi-persistent periodic positioning reference signal, and an on-demand positioning reference signal.

14. The method according to claim 8 or 10, wherein

the second positioning reference signal comprises one of following: one or more first positioning reference signals, one or more groups of the first positioning reference signals, one or more third positioning reference signals, and one or more groups of the third positioning reference signals; and/or

the third positioning reference signal comprises one of following: one or more first positioning reference signals, one or more groups of the first positioning reference signals, one or more second positioning reference signals, and one or more groups of the second positioning reference signals.

15. The method according to claim 14, wherein the first positioning reference signals in the one or more groups of the first positioning reference signals, the second positioning reference signals in the one or more groups of the second positioning reference signals, or the third positioning reference signals in the one or more groups of the third positioning reference signals satisfy at least one of following:

having a same signal time-domain type;

having a same bandwidth part BWP identifier;

having a same frequency layer;

having a same time-domain parameter, wherein the time-domain parameter comprises at least one of following: period, slot offset, muting parameter, and number of repetitions;

belonging to a same positioning reference signal resource set;

belonging to a same activation group set;

having a same group identifier;

having a same resource parameter, wherein the resource parameter comprises at least one of following: beam, beam group, resource set identifier, resource identifier, and QCL information;
belonging to one or more first unit resources, wherein the first unit resource comprises one of following: a positioning reference signal resource, a positioning reference signal resource set, a positioning reference signal resource corresponding to one TRP, and a positioning reference signal resource corresponding to one frequency layer;
having a same reporting type;
having a same reporting configuration;
having a same measurement type;
having a same measurement configuration;
belonging to a same reporting group; and
belonging to a same measurement group.

16. The method according to claim 1, wherein the sending, by a terminal, first information comprises one of following:

sending, by the terminal, the first information on a physical uplink control channel PUCCH;
sending, by the terminal, the first information on a physical uplink shared channel PUSCH;
having, by the terminal, the first information carried in an uplink information for sending; and
having, by the terminal, the first information carried in uplink signaling for transmission.

17. The method according to claim 16, wherein the uplink signaling comprises at least one of following: UCI, MAC CE, RRC signaling, and LPP signaling.

18. The method according to claim 17, wherein the uplink signaling comprises at least one of following:

a first bit string, wherein each bit in the first bit string or each second bit string of the first bit string is used to indicate activating or requesting a target positioning reference signal, and the target positioning reference signal comprises the second positioning reference signal or the third positioning reference signal, wherein a length of the first bit string is N times a length of the second bit string, and N is a common divisor of number of target reference signals to be activated or requested or a common divisor of number of groups of target reference signals to be activated or requested;
first indication information, wherein the first indication information indicates that the activation information of the second positioning reference signal is for activating the first positioning reference signal, or the first indication information indicates that the activation information of the second positioning reference signal is for deactivating the first positioning reference signal, or the first indication information indicates that the request information for the third positioning reference signal is for requesting configuration or activation of the third positioning reference signal;
a second bit string, used to indicate a third target MG to be activated or requested;
a third bit string, used to indicate a fourth target BWP to be activated or to be switched to; and
a fourth bit string, used to indicate a fourth target configuration window to be activated or requested.

19. The method according to claim 18, wherein

one or more pieces of the uplink signaling are used to activate a plurality of target objects; and/or
different types of positioning reference signals are activated using different uplink signaling.

20. The method according to claim 16, wherein the terminal has the first information carried in an uplink signal for transmission, and the uplink signal carries one of following information: request information for an aperiodic third positioning reference signal, request information for a semi-persistent third positioning reference signal, request information for an on-demand third positioning reference signal, activation information for an aperiodic second positioning reference signal, activation information for a semi-persistent second positioning reference signal, activation information for an on-demand second positioning reference signal, deactivation information for an aperiodic second positioning reference signal, deactivation information for a semi-persistent second positioning reference signal, and deactivation information for an on-demand second positioning reference signal.

21. The method according to claim 1, wherein the activation information of the second positioning reference signal or the request information for the third positioning reference signal is used to request, activate, or deactivate at least one of following: transmission of the second positioning reference signal, activation of the second positioning reference signal, configuration of the second positioning reference signal, measurement of the second positioning reference signal, configuration of the first positioning reference signal, transmission of the first positioning reference signal, activation of the first positioning reference signal, configuration of the third positioning reference signal, transmission of the third positioning reference signal, activation of the third positioning reference signal, measurement of the third positioning reference signal, reporting of a measurement result for the second positioning reference signal, reporting of a measurement result for the first positioning reference signal, reporting of a measurement result for the third positioning reference signal, and reporting of a measurement result for a subset of the first positioning reference signal, second positioning reference signal, or third positioning reference signal.

22. The method according to any one of claims 2 to 12, wherein the configuration information of the first positioning reference signal further comprises at least one of following:

identifier information of an eleventh positioning reference signal, for indicating reporting measurement information of the eleventh positioning reference signal; and
configuration information of a reporting resource.

23. The method according to claim 7 or 21, wherein the activation information of the second positioning reference signal and/or the request information for the third positioning reference signal is further used to request, configure, activate, or deactivate a reporting resource.

24. The method according to claim 23, wherein the activation information of the second positioning reference signal and/or the request information for the third positioning reference signal being further used to request, configure, activate, or deactivate a reporting resource comprises at least one of following:

using a positioning reference signal request information field to indicate requesting a reporting resource, wherein the positioning reference signal request information field is used to request configuration, request or activation of the third positioning reference signal;
using a resource request field and a positioning request information field to indicate requesting a reporting resource;
using a pre-configured resource indication or a pre-configured resource identifier to request a reporting resource;
using a buffer resource request to indicate requesting a reporting resource;
using the activation information of the second positioning reference signal to request a reporting resource;
using the request information for the third positioning reference signal to request a reporting resource; and
using positioning reference signal reporting resource request information to request a reporting resource.

25. The method according to claim 24, wherein the reporting resource comprises at least one of following information: a resource size, a target time of resource, a target period of resource, and a resource type.

26. The method according to any one of claims 1 to 25, wherein before the sending, by a terminal, first information, the method further comprises:
receiving, by the terminal, second information sent by a network-side device or a core network device.

27. The method according to claim 26, wherein the first information and the second information have at least one of following characteristics:

that the first positioning reference signal does not belong to the fifth positioning reference signal;
that the first positioning reference signal is a subset of the fifth positioning reference signal;
that in a case that the configuration information of the first positioning reference signal is same as the configuration information of the fifth positioning reference signal, the first information comprises no configuration information of the first positioning reference signal, or comprises only an identifier of the first positioning reference signal or only indication information of the first positioning reference signal;
that the configuration information of the first positioning reference signal is different from the configuration information of the fifth positioning reference signal;
that the terminal expects the configuration information corresponding to the fifth positioning reference signal or first positioning reference signal to be changed to configuration information of the first positioning reference signal in the first information;
that the second positioning reference signal does not belong to the fifth positioning reference signal or the sixth positioning reference signal;
that the second positioning reference signal is a subset of the fifth positioning reference signal or sixth positioning reference signal;

that in a case that the activation information of the second positioning reference signal is same as the activation information of the sixth positioning reference signal, the first information comprises no activation information of the second positioning reference signal, or comprises only an identifier of the second positioning reference signal or only indication information for the second positioning reference signal;

that the activation information of the second positioning reference signal is different from the activation information of the sixth positioning reference signal;

that the terminal expects the activation information corresponding to the sixth positioning reference signal or the second positioning reference signal to be changed to activation information of the second positioning reference signal in the first information;

that the third positioning reference signal does not belong to the seventh positioning reference signal;

that the third positioning reference signal is a subset of the seventh positioning reference signal or fifth positioning reference signal;

that the request information for the third positioning reference signal is same as the request information for the seventh positioning reference signal, and the first information comprises no request information for the third positioning reference signal, or comprises only an identifier of the third positioning reference signal or only indication information for the third positioning reference signal;

that the request information for the third positioning reference signal is different from the request information for the seventh positioning reference signal;

that the terminal expects the request information for the seventh positioning reference signal to be changed to request information for the first positioning reference signal in the first information;

that the terminal expects to receive the third positioning reference signal according to the request information for the third positioning reference signal;

that the terminal expects to receive the second positioning reference signal according to the activation information of the second positioning reference signal; and

that the terminal expects to receive the first positioning reference signal according to the configuration information of the first positioning reference signal.

**28.** The method according to claim 26, wherein the receiving, by the terminal, second information comprises at least one of following:

receiving, by the terminal, second information that is sent by the core network device using LPP signaling;
receiving, by the terminal, second information that is sent by the network-side device using RRC signaling;
receiving, by the terminal, second information that is broadcast by the network-side device;
receiving, by the terminal, second information that is sent by the network-side device using DCI signaling; and
receiving, by the terminal, second information that is sent by the network-side device using MAC CE signaling.

**29.** The method according to any one of claims 6 to 25, wherein after the sending, by a terminal, first information, the method further comprises: receiving, by the terminal, third information, wherein the third information comprises at least one of following:

the second information;
activation failure indication information;
retransmission request information;
an activated second positioning reference signal;
a requested third positioning reference signal;
reconfiguration information of the first positioning reference signal;
reporting request information for a twelfth positioning reference signal;
reporting resource information of the twelfth positioning reference signal;
measurement request information sent by a network-side device or a core network device;
HARQ feedback information; and
HARQ scheduling information.

**30.** The method according to claim 29, wherein the first information and the second information have at least one of following characteristics:

that the fifth positioning reference signal does not belong to the first positioning reference signal;
that the fifth positioning reference signal is a subset of the first positioning reference signal;

that in a case that the second information excludes the configuration information corresponding to the fifth positioning reference signal, or comprises only an identifier of the fifth positioning reference signal or comprises only indication information of the fifth positioning reference signal, the second information indicates the configuration information of the fifth positioning reference signal and the configuration information of the first positioning reference signal;

that the configuration information of the fifth positioning reference signal is different from the configuration information of the first positioning reference signal;

that the fifth positioning reference signal does not belong to the first positioning reference signal or the second positioning reference signal;

that the terminal receives the fifth positioning reference signal and/or the first positioning reference signal according to the configuration information of the fifth positioning reference signal, or receives the fifth positioning reference signal and/or the first positioning reference signal according to the configuration information of the fifth positioning reference signal and the configuration information corresponding to the first positioning reference signal;

that the fifth positioning reference signal is a subset of the first positioning reference signal or second positioning reference signal;

that in a case that the second information excludes the activation information corresponding to the sixth positioning reference signal, or comprises only an identifier of the sixth positioning reference signal or comprises only indication information of the sixth positioning reference signal, the second information indicates that the activation information of the sixth positioning reference signal is same as the activation information of the second positioning reference signal;

that the activation information of the sixth positioning reference signal is different from the activation information of the second positioning reference signal;

that the terminal receives the sixth positioning reference signal and/or the second positioning reference signal according to the activation information of the sixth positioning reference signal, or receives the sixth positioning reference signal and/or the second positioning reference signal according to the activation information of the sixth positioning reference signal and the activation information of the second positioning reference signal;

that the third positioning reference signal is a subset of the fifth positioning reference signal;

that the terminal expects to receive the third positioning reference signal according to the request information for the third positioning reference signal;

that the terminal expects to receive the second positioning reference signal according to the activation information of the second positioning reference signal; and

that the terminal expects to receive the first positioning reference signal according to the configuration information of the first positioning reference signal.

31. The method according to any one of claims 6 to 29, wherein after the sending, by a terminal, first information, the method further comprises at least one of following:

receiving or measuring, by the terminal, the second positioning reference signal;
receiving or measuring, by the terminal, the third positioning reference signal; and
receiving or measuring, by the terminal, the first positioning reference signal.

32. The method according to claim 1 or 29, wherein the second information or the third information is transmitted using downlink signaling, and the downlink signaling comprises one of following: DCI, MAC CE, RRC signaling, and LPP signaling.

33. The method according to claim 32, wherein the downlink signaling comprises at least one of following:

a fifth bit string, wherein each bit in the fifth bit string or each ninth bit string in the fifth bit string is used to indicate a sixth positioning reference signal activated, and a length of the fifth bit string is N1 times a length of the ninth bit string, and N1 is number of the sixth positioning reference signals activated or number of groups of the sixth positioning reference signals activated;

second indication information, wherein the second indication information indicates that the activation information of the sixth positioning reference signal is for activating the sixth positioning reference signal, or the second indication information indicates that the activation information of the sixth positioning reference signal is for deactivating the sixth positioning reference signal;

a sixth bit string, used to indicate a fifth target MG activated;
a seventh bit string, used to indicate activating or switching to a fifth target BWP;

an eighth bit string, used to indicate a fifth target configuration window activated; and
third indication information, wherein the third indication information is identifier information of the fifth positioning reference signal and the sixth positioning reference signal.

**34.** The method according to claim 32, wherein

one or more pieces of the downlink signaling are used to activate a plurality of target objects; and/or
different types of sixth positioning reference signals are activated using different downlink signaling.

**35.** The method according to claim 32, wherein the downlink signaling further comprises at least one of following:

identifier information of twelfth positioning reference signal, for indicating reporting measurement information of the twelfth positioning reference signal; and
configuration information of an uplink resource.

**36.** The method according to claim 35, wherein the downlink signaling indicates the uplink resource in at least one of following manners:

using a positioning reference signal request information field to indicate the uplink resource, wherein the positioning reference signal request information field is used to activate the sixth positioning reference signal;
using a resource request field and a positioning request information field to indicate the uplink resource;
using a pre-configured resource indication or a pre-configured resource identifier to indicate the uplink resource;
using a buffer resource request to indicate the uplink resource;
using the activation information of the sixth positioning reference signal to indicate the uplink resource; and
using positioning reference signal reporting resource request information to indicate the uplink resource.

**37.** The method according to claim 35, wherein the configuration information of the uplink resource comprises at least one of following: a resource size, a target time of resource, a target period of resource, and a resource type.

**38.** The method according to claim 35, wherein a time of a time-domain resource of the uplink resource is not earlier than a transmission time of the sixth positioning reference signal activated, or is not earlier than a transmission time of the sixth positioning reference signal and a processing time of the sixth positioning reference signal, or is not earlier than an end time of a fifth target configuration window.

**39.** The method according to claim 38, wherein the time-domain resource of the uplink resource is determined based on a transmission time of the downlink signaling and time information indicated by a predetermined field in the downlink signaling, or the time-domain resource of the uplink resource is determined based on 1st or last sixth positioning reference signal and time information indicated by a predetermined field in the downlink signaling.

**40.** The method according to claim 29, wherein after the terminal sends the request information for the third positioning reference signal, the method further comprises:
in a case that downlink signaling carrying the second information is not detected in a plurality of consecutive slots, or detected downlink signaling carrying the second information does not meet requirements of the terminal, sending, by the terminal, the request information for the third positioning reference signal again.

**41.** The method according to claim 35, wherein the terminal indicates not expecting to receive, within one slot, a plurality of pieces of downlink signaling for activating same-type sixth positioning reference signals.

**42.** The method according to claim 29, wherein the sixth positioning reference signals activated by the activation information of the sixth positioning reference signal have a same BWP and/or a same frequency layer.

**43.** The method according to claim 29, wherein the method further comprises:
in a case that the sixth positioning reference signals activated by the activation information of the sixth positioning reference signal have different BWPs and/or different frequency layers, the terminal performs one of following:

requesting a target measurement gap and/or configuring a target measurement gap;
performing measurement only on a second positioning reference signal on an active BWP; and
requesting reconfiguration of a BWP.

**44.** A positioning method, comprising at least one of following:

receiving, by a network-side device, first information; wherein the first information comprises at least one of following: configuration information of a first positioning reference signal, activation information of a second positioning reference signal, request information for a third positioning reference signal, and first indication information of a fourth positioning reference signal, wherein the first indication information comprises at least one of following: power control information, bandwidth part BWP switching information, collision indication information, and multiplexing information; and

sending, by the network-side device, second information; wherein the second information comprises at least one of following: configuration information of a fifth positioning reference signal, activation information of a sixth positioning reference signal, request information for a seventh positioning reference signal, and the first indication information of an eighth positioning reference signal.

**45.** The method according to claim 44, wherein the configuration information of the first positioning reference signal comprises at least one of following:

identifier information of the first positioning reference signal, wherein the identifier information comprises at least one of following: frequency layer indicator information, Transmission and reception point TRP identifier information, resource set or resource identifier information, TRP group identifier information, positioning reference signal group identifier information, positioning reference signal resource group identifier information, positioning reference signal resource set identifier information, positioning reference signal reporting set identifier information, measurement gap MG identifier information, and bandwidth part BWP identifier information;

configuration information corresponding to the identifier information, wherein corresponding configuration information comprises at least one of following: period, muting parameter, number of repetitions, offset within a period, bandwidth information, frequency-domain offset information, time information, spatial direction indication information, transmission configuration indicator TCI indication information, quasi co-location QCL indication information, beam indication information, power information, MG configuration information, type of positioning reference signal, BWP information, transmission, stop of transmission, activation/deactivation flag, numerology (numerology), and time offset information;

positioning method indication information;

precision requirement information;

first configuration window;

discontinuous reception DRX configuration information;

positioning reference signal reporting set identifier;

indication information of whether to be multiplexed with other signals;

configuration information of a multiplexed signal; and

priority indication information of the first positioning reference signal.

**46.** The method according to claim 44, wherein the activation information of the second positioning reference signal comprises at least one of following:

identifier information of the second positioning reference signal;

activation time information;

configuration information of the second positioning reference signal;

type information of the second positioning reference signal;

configuration information of a first target MG;

configuration information of a first target BWP;

reporting information of a ninth positioning reference signal, wherein the ninth positioning reference signal is a subset of the second positioning reference signal; and

first target configuration window information, wherein the first target configuration window information comprises at least one of following: first target search window information, first target measurement window information, first target MG information, and first target reporting window information of the second positioning reference signal.

**47.** The method according to claim 44, wherein the request information for the third positioning reference signal comprises at least one of following:

identifier information of the third positioning reference signal, wherein the identifier information comprises at least one of following: frequency layer indicator information, TRP identifier information, resource set or resource identifier information, TRP group identifier information, positioning reference signal group identifier information, positioning reference signal resource group identifier information, positioning reference signal resource set identifier information, positioning reference signal reporting set identifier information, MG identifier information, and BWP identifier information;

configuration information corresponding to the identifier information, wherein corresponding configuration information comprises at least one of following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, BWP information, transmission, stop of transmission, and activation/deactivation flag;

terminal-expected configuration information, wherein expected configuration information comprises at least one of following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, and BWP information;

positioning requirement information, wherein the positioning requirement information comprises at least one of following: positioning precision, positioning delay, positioning power, positioning method, and positioning reliability;

configuration validation time information or configuration time information;

a request for time information;

a request for configuration information of a second target configuration window, wherein the configuration information of the second target configuration window comprises at least one of following: configuration information of a second target search window, configuration information of a second target measurement window, configuration information of a second target MG, and configuration information of a second target reporting window of the third positioning reference signal; and

configuration information of a second target BWP.

**48.** The method according to claim 44, wherein before the receiving, by a network-side device, first information, the method further comprises:
sending, by the network-side device, the second information.

**49.** The method according to claim 48, wherein the first information and the second information have at least one of following characteristics:

that the first positioning reference signal does not belong to the fifth positioning reference signal;

that the first positioning reference signal is a subset of the fifth positioning reference signal;

that in a case that the configuration information of the first positioning reference signal is same as the configuration information of the fifth positioning reference signal, the first information comprises no configuration information of the first positioning reference signal, or comprises only an identifier of the first positioning reference signal or only indication information of the first positioning reference signal;

that the configuration information of the first positioning reference signal is different from the configuration information of the fifth positioning reference signal;

that the terminal expects the configuration information corresponding to the fifth positioning reference signal or first positioning reference signal to be changed to configuration information of the first positioning reference signal in the first information;

that the second positioning reference signal does not belong to the fifth positioning reference signal or the sixth positioning reference signal;

that the second positioning reference signal is a subset of the fifth positioning reference signal or sixth positioning reference signal;

that in a case that the first information excludes the activation information corresponding to the second positioning reference signal, or comprises only an identifier of the second positioning reference signal or comprises only indication information for the second positioning reference signal, it indicates that the activation information of the second positioning reference signal is same as the activation information of the sixth positioning reference signal;

that the activation information of the second positioning reference signal is different from the activation information of the sixth positioning reference signal;

that the terminal expects the activation information corresponding to the sixth positioning reference signal or the second positioning reference signal to be changed to activation information of the second positioning reference signal in the first information;

that the third positioning reference signal does not belong to the seventh positioning reference signal;

that the third positioning reference signal is a subset of the seventh positioning reference signal or fifth positioning reference signal;

that in a case that the first information excludes the request information corresponding to the third positioning reference signal, or comprises only an identifier of the third positioning reference signal or comprises only indication information for the third positioning reference signal, it indicates that the request information corresponding to the third positioning reference signal is same as the request information for the seventh positioning reference signal;

that the request information for the third positioning reference signal is different from the request information for the seventh positioning reference signal;

that the terminal expects the request information for the seventh positioning reference signal to be changed to request information for the first positioning reference signal in the first information;

that the terminal expects to receive the third positioning reference signal according to the request information for the third positioning reference signal;

that the terminal expects to receive the second positioning reference signal according to the activation information of the second positioning reference signal; and

that the terminal expects to receive the first positioning reference signal according to the configuration information of the first positioning reference signal.

**50.** The method according to any one of claims 44, wherein after the receiving, by a network-side device, first information, the method further comprises: sending, by the network-side device, third information, wherein the third information comprises at least one of following:

the second information;
activation failure indication information;
retransmission request information;
an activated second positioning reference signal;
a requested third positioning reference signal;
reconfiguration information of the first positioning reference signal;
reporting request information for a twelfth positioning reference signal;
reporting resource information of the twelfth positioning reference signal;
measurement request information sent by the network-side device or a core network device;
HARQ feedback information; and
HARQ scheduling information.

**51.** The method according to claim 50, wherein the first information and the second information have at least one of following characteristics:

that the fifth positioning reference signal does not belong to the first positioning reference signal;
that the fifth positioning reference signal is a subset of the first positioning reference signal;
that in a case that the configuration information of the fifth positioning reference signal and the configuration information of the first positioning reference signal, the second information excludes the configuration information corresponding to the fifth positioning reference signal, or comprises only an identifier of the fifth positioning reference signal or comprises only indication information of the fifth positioning reference signal;
that the configuration information of the fifth positioning reference signal is different from the configuration information of the first positioning reference signal;
that the fifth positioning reference signal does not belong to the first positioning reference signal or the second positioning reference signal;
that the terminal is indicated to receive the fifth positioning reference signal and/or the first positioning reference signal according to the configuration information of the fifth positioning reference signal, or receive the fifth positioning reference signal and/or the first positioning reference signal according to the configuration information of the fifth positioning reference signal and the configuration information corresponding to the first positioning reference signal;
that the fifth positioning reference signal is a subset of the first positioning reference signal or second positioning reference signal;
that in a case that the activation information of the sixth positioning reference signal is same as the activation information of the second positioning reference signal, the second information excludes the activation information of the sixth positioning reference signal, or comprises only an identifier of the sixth positioning reference signal or comprises only indication information of the sixth positioning reference signal;

that the activation information of the sixth positioning reference signal is different from the activation information of the second positioning reference signal;

that the terminal is indicated to receive the sixth positioning reference signal and/or the second positioning reference signal according to the activation information of the sixth positioning reference signal, or receive the sixth positioning reference signal and/or the second positioning reference signal according to the activation information of the sixth positioning reference signal and the activation information of the second positioning reference signal;

that the third positioning reference signal is a subset of the fifth positioning reference signal;

that the terminal expects to receive the third positioning reference signal according to the request information for the third positioning reference signal;

that the terminal expects to receive the second positioning reference signal according to the activation information of the second positioning reference signal; and

that the terminal expects to receive the first positioning reference signal according to the configuration information of the first positioning reference signal.

**52.** A positioning apparatus, comprising at least one of following:

a first sending module, configured to send first information, wherein the first information comprises at least one of following: configuration information of a first positioning reference signal, activation information of a second positioning reference signal, request information for a third positioning reference signal, and first indication information of a fourth positioning reference signal, wherein the first indication information comprises at least one of following: power control information, bandwidth part BWP switching information, collision indication information, and multiplexing information; and

a first receiving module, configured to receive second information, wherein the second information comprises at least one of following: configuration information of a fifth positioning reference signal, activation information of a sixth positioning reference signal, request information for a seventh positioning reference signal, and the first indication information of an eighth positioning reference signal.

**53.** The apparatus according to claim 52, wherein the configuration information of the first positioning reference signal comprises at least one of following:

identifier information of the first positioning reference signal, wherein the identifier information comprises at least one of following: frequency layer indicator information, Transmission and reception point TRP identifier information, resource set or resource identifier information, TRP group identifier information, positioning reference signal group identifier information, positioning reference signal resource group identifier information, positioning reference signal resource set identifier information, positioning reference signal reporting set identifier information, measurement gap MG identifier information, and bandwidth part BWP identifier information;

configuration information corresponding to the identifier information, wherein corresponding configuration information comprises at least one of following: period, muting parameter, number of repetitions, offset within a period, bandwidth information, frequency-domain offset information, time information, spatial direction indication information, transmission configuration indicator TCI indication information, quasi co-location QCL indication information, beam indication information, power information, MG configuration information, type of positioning reference signal, BWP information, transmission, stop of transmission, activation/deactivation flag, numerology (numerology), and time offset information;

positioning method indication information;

precision requirement information;

configuration information of a first configuration window;

discontinuous reception DRX configuration information;

positioning reference signal reporting set identifier;

indication information of whether to be multiplexed with other signals;

configuration information of a multiplexed signal; and

priority indication information of the first positioning reference signal.

**54.** The apparatus according to claim 53, wherein the configuration information of the first configuration window comprises at least one of following:

configuration information of the first positioning reference signal in relation to the first configuration window;
configuration information of a selected positioning reference signal in relation to the first configuration window;
start time information of the first configuration window;
window length information of the first configuration window; and
period information of the first configuration window; wherein
the first configuration window comprises at least one of following: a search window, a measurement window, a measurement gap MG, and a reporting window.

**55.** The method according to claim 53, wherein in a case that the first positioning reference signal is a semi-persistent positioning reference signal, an aperiodic positioning reference signal, or an on-demand positioning reference signal, the configuration information of the first positioning reference signal further comprises at least one of following:

one or more pieces of activation state information;
period and time offset information;
time-domain offset information; and
starting position information for sending the first positioning reference signal.

**56.** The apparatus according to claim 52, wherein the activation information of the second positioning reference signal comprises at least one of following:

identifier information of the second positioning reference signal;
activation time information;
configuration information of the second positioning reference signal;
type information of the second positioning reference signal;
configuration information of a first target BWP;
reporting information of a ninth positioning reference signal, wherein the ninth positioning reference signal is a subset of the second positioning reference signal; and
first target configuration window information, wherein the first target configuration window information comprises at least one of following: first target search window information, first target measurement window information, first target MG information, and first target reporting window information of the second positioning reference signal.

**57.** The apparatus according to claim 52, wherein the request information for the third positioning reference signal comprises at least one of following:

identifier information of the third positioning reference signal, wherein the identifier information comprises at least one of following: frequency layer indicator information, TRP identifier information, resource set or resource identifier information, TRP group identifier information, positioning reference signal group identifier information, positioning reference signal resource group identifier information, positioning reference signal resource set identifier information, positioning reference signal reporting set identifier information, MG identifier information, and BWP identifier information;
configuration information corresponding to the identifier information, wherein corresponding configuration information comprises at least one of following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, BWP information, transmission, stop of transmission, and activation/deactivation flag;
terminal-expected configuration information, wherein expected configuration information comprises at least one of following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, and BWP information;
positioning requirement information, wherein the positioning requirement information comprises at least one of following: positioning precision, positioning delay, positioning power, positioning method, and positioning reliability;
configuration validation time information or configuration time information;
a request for time information;
a request for configuration information of a second target configuration window, wherein the configuration information of the second target configuration window comprises at least one of following: configuration information of a second target search window, configuration information of a second target measurement window, configuration information of a second target MG, and configuration information of a second target reporting window of the third positioning reference signal; and

configuration information of a second target BWP.

**58.** The apparatus according to claim 52, wherein the sending, by the first sending module, first information comprises one of following:

sending the first information on a physical uplink control channel PUCCH;
sending the first information on a physical uplink shared channel PUSCH;
having the first information carried in an uplink information for sending; and
having the first information carried in uplink signaling for transmission.

**59.** A positioning apparatus, comprising:

a second receiving module, configured to receive first information, wherein the first information comprises at least one of following: configuration information of a first positioning reference signal, activation information of a second positioning reference signal, request information for a third positioning reference signal, and first indication information of a fourth positioning reference signal, wherein the first indication information comprises at least one of following: power control information, bandwidth part BWP switching information, collision indication information, and multiplexing information; and

a second sending module, configured to send second information, wherein the second information comprises at least one of following: configuration information of a fifth positioning reference signal, activation information of a sixth positioning reference signal, request information for a seventh positioning reference signal, and the first indication information of an eighth positioning reference signal.

**60.** The apparatus according to claim 59, wherein the configuration information of the first positioning reference signal comprises at least one of following:

identifier information of the first positioning reference signal, wherein the identifier information comprises at least one of following: frequency layer indicator information, Transmission and reception point TRP identifier information, resource set or resource identifier information, TRP group identifier information, positioning reference signal group identifier information, positioning reference signal resource group identifier information, positioning reference signal resource set identifier information, positioning reference signal reporting set identifier information, measurement gap MG identifier information, and bandwidth part BWP identifier information;
configuration information corresponding to the identifier information, wherein corresponding configuration information comprises at least one of following: period, muting parameter, number of repetitions, offset within a period, bandwidth information, frequency-domain offset information, time information, spatial direction indication information, transmission configuration indicator TCI indication information, quasi co-location QCL indication information, beam indication information, power information, MG configuration information, type of positioning reference signal, BWP information, transmission, stop of transmission, activation/deactivation flag, numerology (numerology), and time offset information;
positioning method indication information;
precision requirement information;
first configuration window;
discontinuous reception DRX configuration information;
positioning reference signal reporting set identifier;
indication information of whether to be multiplexed with other signals;
configuration information of a multiplexed signal; and
priority indication information of the first positioning reference signal.

**61.** The apparatus according to claim 59, wherein the activation information of the second positioning reference signal comprises at least one of following:

identifier information of the second positioning reference signal;
activation time information;
configuration information of the second positioning reference signal;

type information of the second positioning reference signal;
configuration information of a first target MG;
configuration information of a first target BWP;
reporting information of a ninth positioning reference signal, wherein the ninth positioning reference signal is a subset of the second positioning reference signal; and
first target configuration window information, wherein the first target configuration window information comprises at least one of following: first target search window information, first target measurement window information, first target MG information, and first target reporting window information of the second positioning reference signal.

**62.** The apparatus according to claim 59, wherein the request information for the third positioning reference signal comprises at least one of following:

identifier information of the third positioning reference signal, wherein the identifier information comprises at least one of following: frequency layer indicator information, TRP identifier information, resource set or resource identifier information, TRP group identifier information, positioning reference signal group identifier information, positioning reference signal resource group identifier information, positioning reference signal resource set identifier information, positioning reference signal reporting set identifier information, MG identifier information, and BWP identifier information;
configuration information corresponding to the identifier information, wherein corresponding configuration information comprises at least one of following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, BWP information, transmission, stop of transmission, and activation/deactivation flag;
terminal-expected configuration information, wherein the expected configuration information comprises at least one of following: period, muting parameter, number of repetitions, offset within a period, bandwidth information, frequency-domain offset information, time information, spatial direction indication information, TCI indication information, QCL indication information, beam indication information, power information, MG configuration information, type of the third positioning reference signal, and BWP information;
positioning requirement information, wherein the positioning requirement information comprises at least one of following: positioning precision, positioning delay, positioning power, positioning method, and positioning reliability;
configuration validation time information or configuration time information;
a request for time information;
a request for configuration information of a second target configuration window, wherein the configuration information of the second target configuration window comprises at least one of following: configuration information of a second target search window, configuration information of a second target measurement window, configuration information of a second target MG, and configuration information of a second target reporting window of the third positioning reference signal; and
configuration information of a second target BWP.

**62.** A terminal, comprising a processor, a memory, and a program or instructions stored in the memory and executable on the processor, wherein when the program or instructions are executed by the processor, steps of the positioning method according to any one of claims 1 to 43 are implemented.

**63.** A network-side device, comprising a processor, a memory, and a program or instructions stored in the memory and executable on the processor, wherein when the program or instructions are executed by the processor, steps of the positioning method according to any one of claims 44 to 51 are implemented.

**64.** A readable storage medium, wherein the readable storage medium stores a program or instructions, and when the program or instructions are executed by a processor, the positioning method according to any one of claims 1 to 43 are implemented, or steps of the positioning method according to any one of claims 44 to 51 are implemented.

**65.** A chip, wherein the chip comprises a processor and a communications interface, the communications interface is coupled to the processor, and the processor is configured to execute a program or instructions of a terminal to implement the positioning method according to any one of claims 1 to 43; or the processor is configured to execute a program or instructions of a network-side device to implement steps of the positioning method according to any one of claims 44 to 51.

FIG. 1

200    S210

A terminal sends first information

S212

The terminal receives second information

FIG. 2

| R | Serving cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

...

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |

FIG. 3

| A/D | Serving cell ID | BWP ID | Oct 1 |
|---|---|---|---|
| TRP ID | | | Oct 2 |
| PRS set ID | PRS resource ID | | Oct 3 |
| R | TCI state $ID_0$ | | Oct 4 |

...

| R | TCI state $ID_N$ | Oct N+4 |
|---|---|---|

FIG. 4

| R | Serving cell ID | | | | | BWP ID | | Oct 1 |
|---|---|---|---|---|---|---|---|---|
| R | R | R | R | $S_3$ | $S_2$ | $S_1$ | $S_0$ | Oct 2 |

FIG. 5

600

S610

A network-side device receives first information

S612

The network-side device sends second information

FIG. 6

700

| TRP | Serving cell/ base station | UE | LMF/location server |

701

702

703

704

705

705

706

707

707

FIG. 7

800

| Neighboring cell/TRP | Serving cell/ base station | UE | LMF/location server |

801

802

803

804 / 804

805

806 / 806

FIG. 8

900

901

First sending module

902

First receiving module

FIG. 9

1000

1001

Second receiving module

1002

Second sending module

FIG. 10

1100

Communication device

1101 Processor ⟺ Memory 1102

FIG. 11

1200

1201 — Radio frequency unit

Network module — 1202

1210

Memory

1209 — Application program

Operating system

1208 — Interface unit

Processor

Audio output unit — 1203

1204

Input unit

Graphics processing unit — 12041

Microphone — 12042

1207

User input unit

12071 — Touch pannel

12072 — Other input devices

1206

Display unit — 12061

Display pannel

Sensor — 1205

FIG. 12

FIG. 13

## INTERNATIONAL SEARCH REPORT

International application No.

**PCT/CN2021/123805**

### A. CLASSIFICATION OF SUBJECT MATTER

H04W 64/00(2009.01)i

According to International Patent Classification (IPC) or to both national classification and IPC

### B. FIELDS SEARCHED

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNABS, CNTXT, CNKI, USTXT, WOTXT, EPTXT, VEN, IEEE: 定位参考信号, 配置, 激活, 指示, 请求, 带宽部分, 功率控制, 非周期, PRS, Positioning Reference Signal, configuration, active, indirection, request, BWP, Bandwidth Part, Power control, aperiodic

### C. DOCUMENTS CONSIDERED TO BE RELEVANT

| Category* | Citation of document, with indication, where appropriate, of the relevant passages | Relevant to claim No. |
|---|---|---|
| X | CN 111417189 A (RESEARCH INSTITUTE OF CHINA MOBILE COMMUNICATIONS CORPORATION et al.) 14 July 2020 (2020-07-14) claims 1-5, description paragraphs [0139]-[0348], [0411] | 1-65 |
| A | CN 106664591 A (LG ELECTRONICS INC.) 10 May 2017 (2017-05-10) entire document | 1-65 |
| A | CN 109076488 A (TELEFONAKTIEBOLAGET LM ERICSSON (PUBL)) 21 December 2018 (2018-12-21) entire document | 1-65 |
| A | WO 2020206021 A1 (APPLE INC.) 08 October 2020 (2020-10-08) entire document | 1-65 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 December 2021** | **05 January 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/123805** |

| Patent document cited in search report | | | Publication date (day/month/year) | Patent family member(s) | | | Publication date (day/month/year) |
| --- | --- | --- | --- | --- | --- | --- | --- |
| CN | 111417189 | A | 14 July 2020 | WO | 2020143619 | A1 | 16 July 2020 |
| CN | 106664591 | A | 10 May 2017 | CN | 106664591 | B | 30 June 2020 |
| | | | | US | 2017171857 | A1 | 15 June 2017 |
| | | | | KR | 20170129595 | A | 27 November 2017 |
| | | | | US | 10111213 | B2 | 23 October 2018 |
| | | | | WO | 2016153253 | A1 | 29 September 2016 |
| CN | 109076488 | A | 21 December 2018 | WO | 2017194675 | A1 | 16 November 2017 |
| | | | | ZA | 201806970 | B | 29 January 2020 |
| | | | | EP | 3456114 | A1 | 20 March 2019 |
| | | | | RU | 2018143996 | A3 | 15 June 2020 |
| | | | | US | 2020304226 | A1 | 24 September 2020 |
| | | | | JP | 2019523390 | A | 22 August 2019 |
| | | | | PH | 12018502231 | A1 | 08 July 2019 |
| | | | | CN | 109076488 | B | 25 June 2021 |
| | | | | US | 10727970 | B2 | 28 July 2020 |
| | | | | RU | 2725164 | C2 | 30 June 2020 |
| | | | | US | 2018205482 | A1 | 19 July 2018 |
| | | | | RU | 2018143996 | A | 15 June 2020 |
| WO | 2020206021 | A1 | 08 October 2020 | None | | | |

Form PCT/ISA/210 (patent family annex) (January 2015)

**REFERENCES CITED IN THE DESCRIPTION**

**Patent documents cited in the description**

- CN 202011105346X